# EUROPÄISCHE PATENTSCHRIFT

(11) **EP 2 470 387 B1**
(45) Veröffentlichungstag und Bekanntmachung des Hinweises auf die Patenterteilung: **09.04.2014**
(21) Anmeldenummer: 10745199.9
(22) Anmeldetag: 11.08.2010
(51) Int. Cl.: B60G 11/08, B60G 11/10, B60G 11/12, B60G 21/02, B60G 21/05, F16F 1/368

(54) **LAGERVORRICHTUNG EINER QUERBLATTFEDER**
MOUNTING DEVICE FOR A LATERALLY ORIENTATED LEAFSPRING
DISPOSITIF DE MONTAGE POUR UN RESSORT À LAME LATÉRALEMENT ORIENTÉ

(30) Priorität: 26.08.2009 DE 102009028900
(43) Veröffentlichungstag der Anmeldung: 04.07.2012
(73) Patentinhaber: ZF Friedrichshafen AG, 88038 Friedrichshafen (DE)
(72) Erfinder: FRUHMANN, Gabriele, A-6900 Bregenz (AT); WERRIES, Hartmut, 49143 Bissendorf (DE); HOFMANN, Peter, 82131 Gauting (DE); ELBERS, Christoph, 32351 Stemwede (DE)
(86) Internationale Anmeldenummer: PCT/EP2010/061673
(87) Internationale Veröffentlichungsnummer: WO 2011/023545

(56) Entgegenhaltungen:
- EP-A2- 0 373 389
- EP-A2- 0 763 438
- WO-A1-2008/125076
- FR-A1- 2 543 073
- JP-A- 4 059 406
- JP-B- 7 039 242
- US-A- 4 643 406

## Beschreibung

Die Erfindung betrifft eine Lagervorrichtung einer Querblattfeder gemäß der im Oberbegriff des Patentanspruches 1 näher definierten Art.

Aus der JP 04-059 406 A ist eine Lagervorrichtung einer Querblattfeder, die im Bereich einer Fahrzeugachse eines Fahrzeuges montierbar ist, mit einer Lageraußenschaleneinrichtung und mit von der Lageraußenschaleneinrichtung zumindest bereichsweise umgriffenen Einlegeeinrichtungen bekannt. Die Einlegeeinrichtungen weisen jeweils Lagenelemente mit unterschiedlicher Steifigkeit auf, wobei die Einlegeeinrichtungen in montiertem Zustand jeweils zwischen der Lageraußenschaleneinrichtung und der Querblattfeder angeordnet sind. Mit höherer Steifigkeit ausgeführte Lagenelemente bzw. Metallelemente sind jeweils zwischen der Querblattfeder und mit niedrigerer Steifigkeit ausgeführten Lagenelementen, die aus vulkanisiertem Gummi hergestellt sind, positioniert. Die mit höherer Steifigkeit ausgebildeten Lagenelemente sind zwischen in axialer Richtung der Querblattfeder orientierten Endbereichen halbschalenförmig und konvex ausgebildet. Die Endbereiche der mit höherer Steifigkeit ausgebildeten Lageelemente weisen in Bezug auf die Oberfläche der Querblattfeder wenigstens annähernd konkav gekrümmte Bereiche auf, deren freie Enden von der Oberfläche der Querblattfeder weggerichtet sind.

Nachteilig dabei ist jedoch, dass die gummielastischen und mit niedrigerer Steifigkeit ausgeführten Lagenelemente in montiertem Zustand der Lagervorrichtung unter der von der Lageraußenschaleneinrichtung aufgebrachten Vorspannkraft zwischen der Lageraußenschaleneinrichtung und der Querblattfeder verformt und zwischen diesen in undefinierter Art und Weise ausgepresst werden, dass die Funktionalität der Lagervorrichtung nicht in gewünschtem Umfang gewährleistbar ist. Darüber hinaus ist eine Montage der Lagervorrichtung aufwändig und eine Positionierung der verschiedenen Lagenelemente zueinander aufgrund der Ausgestaltung der Lagenelemente der Einlegeeinrichtungen nicht im erforderlichen Umfang gewährleistet.

Der vorliegenden Erfindung liegt daher die Aufgabe zugrunde, eine einfach montierbare Lagervorrichtung zur Verfügung zu stellen, deren Funktionsweise bei Anliegen einer Lagervorspannkraft gewährleistet ist.

Erfindungsgemäß wird diese Aufgabe mit einer Lagervorrichtung mit den Merkmalen des Patentanspruches 1 gelöst.

Die erfindungsgemäße Lagervorrichtung einer Querblattfeder, die im Bereich einer Fahrzeugachse eines Fahrzeuges montierbar ist, ist mit einer Lageraußenschaleneinrichtung und mit von der Lageraußenschaleneinrichtung zumindest bereichsweise umgriffenen Einlegeeinrichtungen ausgebildet. Die Einlegeeinrichtungen weisen jeweils Lagenelemente mit unterschiedlicher Steifigkeit auf. Zusätzlich sind die Einlegeeinrichtungen in montiertem Zustand jeweils zwischen der Lageraußenschaleneinrichtung und der Querblattfeder angeordnet. Mit höherer Steifigkeit ausgeführte Lagenelemente der Einlegeeinrichtungen sind jeweils zwischen der Querblattfeder und mit niedrigerer Steifigkeit ausgeführten Lagenelementen positioniert. Die mit höherer Steifigkeit ausgebildeten Lagenelemente sind zwischen den in axialer Richtung der Querblattfeder orientierten Endbereichen halbschalenförmig und konvex ausgebildet und die Endbereiche der mit höherer Steifigkeit ausgebildeten Lagenelemente weisen in Bezug auf die Oberfläche der Querblattfeder konkav gekrümmte Bereiche auf, deren freie Enden von der Oberfläche der Querblattfeder weggerichtet sind.

Erfindungsgemäß umgreifen die an die mit niedrigerer Steifigkeit ausgeführten Lagenelemente und an die Querblattfeder angrenzenden Lagenelemente mit höherer Steifigkeit mit ihren Enden die mit niedrigerer Steifigkeit ausgeführten Lagenelemente bereichsweise formschlüssig, womit einerseits die mit höherer Steifigkeit ausgeführten Lagenelemente an den mit niedriger Steifigkeit ausgebildeten Lagenelemente zentriert sind und auf einfache Art und Weise montierbar sind und andererseits ein undefiniertes Auspressen der mit niedrigerer Steifigkeit ausgeführten Lagenelemente aufgrund der von der Lageraußenschaleneinrichtung und der Querblattfeder auf diese Lagenelemente ausgeübten Vorspannkraft aus dem Bereich zwischen der Lageraußenschaleneinrichtung und der Querblattfeder auf konstruktiv einfache Art und Weise vermieden ist und eine einwandfreie Funktionsweise der Lagervorrichtung gewährleistet ist.

Die in Bezug auf die Oberfläche der Querblattfeder aufgebogenen Endbereiche der mit höherer Steifigkeit ausgeführten Lagenelemente verhindern durch ihre abgerundete Form auf einfache Art und Weise auch bei größeren Verformungen bzw. größeren Auslenkungen der Querblattfeder eine Beschädigung der Querblattfeder.

Zusätzlich wird durch die mit unterschiedlicher Steifigkeit ausgeführten Lagenelemente der Einlegeeinrichtungen eine für die Funktionsweise der Querblattfeder erforderliche Drehbewegung der Querblattfeder im Bereich der Lagervorrichtung bei gleichzeitig ausreichend hoher Lagersteifigkeit ermöglicht, womit bei gleichseitigem und wechselseitigem Einfedern im Bereich von Rädern der beiden Fahrzeugseiten unterschiedliche Federraten zur Verfügung stellbar sind.

Des Weiteren sind über die Querblattfeder auch Radführungsfunktionen durch die unterschiedlichen Steifigkeiten der Lagenelemente zur Verfügung stellbar, da eine Lagersteifigkeit in Fahrzeugquerrichtung beispielsweise entsprechend hoch einstellbar ist und eine Verschiebung der Querblattfeder in Fahrzeugquerrichtung auf einfache Art und Weise vermeidbar ist.

Zusätzlich ist auch eine Lagersteifigkeit der erfindungsgemäßen Lagervorrichtung in Fahrzeughochrichtung mit dem für einen ausreichenden Kraftschluss zwischen der Lagervorrichtung und der Querblattfeder in ausreichendem Umfang einstellbar. Dies bietet auf einfache Art und Weise die Möglichkeit, bei wechselseitiger Einfederung ein unerwünschtes und einem Starrkörper entsprechendes Verschieben oder Bewegen der Querblattfeder im Bereich der Lagervorrichtung zu vermeiden. Bei entsprechend hoher Lagersteifigkeit der erfindungsgemäßen Lagervorrichtung in Fahrzeughochrichtung stellt sich eine gezielte Verformung der Querblattfeder in Form eines sogenannten S-Schlages ein, aufgrund der sich im Vergleich zu einem gleichzeitigen Einfedern ohne entsprechenden S-Schlag im Bereich der Querblattfeder eine höhere wechselseitige Federrate ergibt.

Bei einer vorteilhaften Weiterbildung der erfindungsgemäßen Lagervorrichtung sind zwischen den mit niedrigerer Steifigkeit ausgebildeten Lagenelementen und der Lageraußenschaleneinrichtung wiederum weitere Lagenelemente mit höherer Steifigkeit vorgesehen, um die Lagervorrichtung jeweils mit einer an den jeweils vorliegenden Anwendungsfall angepassten Lagersteifigkeit ausführen zu können.

Die an die mit niedrigerer Steifigkeit ausgeführten Lagenelemente und an die Lageraußenschaleneinrichtung angrenzenden weiteren Lagenelemente mit höherer Steifigkeit umgreifen die Lageraußenschaleneinrichtung bei einer ebenfalls einfach montierbaren Ausführungsform der erfindungsgemäßen Lagervorrichtung mit ihren freien Enden die Lageraußenschaleneinrichtung bereichsweise.

Die Lageraußenschaleneinrichtung weist bei einer vorteilhaften Ausführungsform der erfindungsgemäßen Lagervorrichtung zwei miteinander verbindbare Lageraußenschalen, welche die Einlegeeinrichtungen zumindest bereichsweise umgreifen, wobei die Einlegeeinrichtungen bei einer Weiterbildung der erfindungsgemäßen Lagervorrichtung über eine die Lageraußenschalen miteinander und mit einem Fahrzeugaufbau eines Fahrzeuges verbindende Schraubeneinrichtung zumindest kraftschlüssig mit den Lageraußenschalen und der Querblattfeder verbindbar sind.

Letztgenannte Ausführungsform der erfindungsgemäßen Lagervorrichtung ist im Vergleich zu aus dem Stand der Technik bekannten Lagervorrichtungen bauraumgünstiger ausgebildet, da diese lediglich im Bereich der Lageraußenschalen mit einer Schraubeneinrichtung an der Querblattfeder montierbar ist, die wiederum zur festen Verbindung zwischen der Lagervorrichtung und der Fahrzeugkarosserie bzw. einem damit verbundenen Hilfsrahmen vorgesehen ist. Über die Schraubeneinrichtung wird im montierten Zustand der Lagervorrichtung die auf die Einlegeeinrichtungen aufzubringende Vorspannkraft zur Verfügung gestellt.

Da im Bereich der Einlegeeinrichtungen keine zusätzlichen Schraubeneinrichtungen vorgesehen sind, sind die Lagenelemente im Vergleich zu aus dem Stand der Technik bekannten Lösungen mit geringen Abmessungen ausführbar und auch kostengünstiger herstellbar, da beispielsweise keine Gewindegänge in die Lagenelemente einzuschneiden sind.

Um die im Betrieb eines Fahrzeuges wirkenden Kräfte und Momente von den mit niedrigerer Steifigkeit ausgeführten Lagenelementen mit möglichst geringer Flächenpressung im Bereich zwischen den Einlegeeinrichtungen und der Querblattfeder übertragen zu können, ist die Querblattfeder in Bezug auf eine Fahrzeughochachse in ober- und unterseitig angeordneten Anlagebereichen für die Einlegeeinrichtungen mit konvexen Erhebungen ausbildbar oder es sind zwischen den Lageelementen der Einlegeeinrichtungen und der Querblattfeder jeweils ein vorzugsweise wenigstens annähernd halbzylindrisch ausgeführtes Einlegeteil der Einlegeeinrichtungen anordenbar, die mit höherer Steifigkeit ausgebildet sind als die mit geringerer Steifigkeit ausgeführten Lagenelemente.

Unter dem Begriff wenigstens annähernd halbzylindrisch ausgeführte Einlegeteile werden vorliegend alle volumentrischen Gebilde subsumiert, welche zumindest mit wenigstens annähernd kreissegmentartigen Grundflächen ausgebildet sind, die zueinander beabstandet sind. Dabei besteht die Möglichkeit, dass der die Sehnenenden verbindende Bogen der Grundfläche kreisförmig oder elliptisch ausgeführt ist. Bei Weiterbildungen ist die Sehne gerade oder ebenfalls gekrümmt, vorzugsweise konvex, ausgebildet. Im Bereich der Übergänge zwischen der Sehne und dem Bogen der Grundfläche können in Abhängigkeit des jeweiligen Anwendungsfalles Kanten oder entsprechende Abrundungen vorgesehen sein.

Damit im Betrieb eines Fahrzeuges Beschädigungen der Querblattfeder im Bereich der Lagervorrichtung vermieden werden können, sind die Einlegeteile der Einlegeeinrichtungen in zumindest in montiertem Zustand der Querblattfeder zugewandten Anlagebereichen mit einer gummielastischen Schutzschicht ausbildbar. Bei einer weiteren vorteilhaften Ausführungsform der erfindungsgemäßen Lagervorrichtung sind die mit höherer Steifigkeit ausgebildeten Lagenelemente alternativ hierzu oder zusätzlich dazu wenigstens in den Endbereichen zumindest bereichsweise mit einer gummielastischen Schutzschicht versehen.

Eine Lagersteifigkeit der erfindungsgemäßen Lagervorrichtung ist dadurch variierbar, dass zumindest die mit niedrigerer Steifigkeit ausgebildeten Lagenelemente Aussparungen aufweisen.

Um im Betrieb eines Fahrzeuges wirkende Kräfte und Momente von den Einlegeeinrichtungen ohne Relativbewegung zwischen den Einlegeeinrichtungen und der Querblattfeder in die Querblattfeder einleiten zu können, ist wenigstens eine der Einlegeeinrichtungen in einer Auflagefläche zugewandten Anlagefläche bei einer weiteren vorteilhaften Ausführungsform der erfindungsgemäßen Lagervorrichtung mit wenigstens einer Aufnahmeeinrichtung ausgeführt, in die ein Bereich der Querblattfeder in montiertem Zustand der Einlegeeinrichtungen eingreift. Damit ist die erfindungsgemäße Lagervorrichtung neben dem über die Schraubeneinrichtung hergestellten Kraftschluss auch formschlüssig mit der Querblattfeder verbunden, wobei der Formschluss zwischen der Lagervorrichtung und der Querblattfeder vorzugsweise derart ausgeführt ist, dass aufgrund des Formschlusses in der Querblattfeder möglichst geringe zusätzliche Spannungen entstehen, die die Funktionsweise der Querblattfeder unter Umständen in unerwünschtem Umfang beeinträchtigen und eine Lebensdauer der Querblattfeder verringern..

Zusätzlich oder alternativ hierzu ist ein Formschluss zwischen der Lagervorrichtung und der Querblattfeder bei weiteren vorteilhaften Ausführungen der erfindungsgemäßen Lagervorrichtung dadurch herstellbar, dass die Querblattfeder im Bereich einer der Auflagefläche für die eine der Einlegeeinrichtung mit einer Ausnehmung ausgebildet ist, in die die Einlegeeinrichtung formschlüssig eingreift.

Der in die Einlegeeinrichtungen eingreifende Bereich der Querblattfeder ist vorzugsweise im Bereich der Ausnehmung der Querblattfeder vorgesehen, womit ein Verlauf von Fasern einer vorzugsweise aus Verbundwerkstoff hergestellten Querblattfeder nur geringfügig von einem für die Funktionsweise der Querblattfeder erforderlichen Verlauf im Bereich der Lagervorrichtung abweicht.

Die jeweils mit der niedrigeren Steifigkeit ausgebildeten Lagenelemente der Einlegeeinrichtungen übergreifen die Lageraußenschalen bei einer vorteilhaften Ausführungsform der erfindungsgemäßen Vorrichtung mit in montiertem Zustand in Fahrzeugquerrichtung weisenden vorzugsweise wulstartigen Endbereichen, wobei die Lageraußenschalen jeweils vorzugsweise mit Vorsprüngen in die wulstartigen Endbereich der Lagenelemente eingreifen. Damit sind die Einlegeeinrichtungen gegenüber den Lageraußenschalen in Fahrzeugquerrichtung entsprechend positionierbar während die Positionierung zwischen den Einlegeeinrichtungen und den Lageraußenschalen in Fahrzeuglängsrichtung über die in die Lagenelemente bzw. dessen wulstartigen Endbereiche eingreifende Vorsprünge der Lageraußenschalen gewährleistet ist und somit eine einfache Montage der Lagervorrichtung möglich ist.

Bei einer weiteren vorteilhaften Ausführungsform der erfindungsgemäßen Lagervorrichtung übergreifen die mit niedrigerer Steifigkeit ausgebildeten Lagenelemente die Querblattfeder mit Anschlagbereichen in montiertem Zustand in Fahrzeuglängsrichtung und in Fahrzeughochrichtung jeweils zumindest bereichsweise, um die mehrteilig aufgebauten Einlegeeinrichtungen während der Montage gegenüber der Querblattfeder auf einfache Art und Weise positionieren zu können und zum anderen eine weiche Abstützung der Querblattfeder in Fahrzeuglängsrichtung im Bereich der Lageraußenschalen auf konstruktiv einfache Art und Weise zur Verfügung stellen zu können.

Die Anschlagbereiche können in der Querblattfeder zugewandten Anlagebereichen und/oder in den den Lageraußenschalen zugewandten Anlagebereichen mit wenigstens annähernd in Fahrzeuglängsrichtung orientierten Vorsprüngen und/oder Ausnehmungen ausgeführt sein, um unterschiedliche Lagersteifigkeiten über der Verschiebung der Querblattfeder im Bereich der erfindungsgemäßen Lagervorrichtung zu erreichen, wobei die in Fahrzeuglängsrichtung als Lageranschläge wirkenden Anschlagbereiche in Bezug auf eine Fahrzeugvorderseite vor und hinter der Querblattfeder unterschiedlich ausgeführt sein können, um entsprechend unterschiedliche Lagercharakteristiken darstellen zu können.

Weitere Vorteile und vorteilhafte Ausführungsformen des erfindungsgemäßen Gegenstandes ergeben sich aus den Patentansprüchen und den nachfolgend anhand der Zeichnung beschriebenen Ausführungsbeispielen, wobei in der Beschreibung der verschiedenen Ausführungsbeispiele zugunsten der Übersichtlichkeit für bau- und funktionsgleiche Bauteile dieselben Bezugszeichen verwendet werden.

Sowohl die in den Unteransprüchen angegebenen Merkmale als auch die in den nachfolgenden Ausführungsbeispielen der erfindungsgemäßen Lagervorrichtung angegebenen Merkmale sind jeweils für sich alleine oder in beliebiger Kombination miteinander geeignet, den erfindungsgemäßen Gegenstand weiterzubilden. Die jeweiligen Merkmalskombinationen stellen hinsichtlich der Weiterbildung des Gegenstandes nach der Erfindung keine Einschränkung dar, sondern weisen im Wesentlichen lediglich beispielhaften Charakter auf.

Es zeigt:
- Fig. 1: eine stark schematisierte Darstellung einer Querblattfeder mit zwei äußeren Führungslagern und zwei im mittleren Bereich der Querblattfeder angeordneten erfindungsgemäßen Lagervorrichtungen;
- Fig. 2: eine dreidimensionale Darstellung einer ersten Ausführungsform der erfindungsgemäßen Lagervorrichtung, welche in einem mittleren Bereich einer Querblattfeder angeordnet ist;
- Fig. 3: die Lagervorrichtung gemäß Fig. 2 in einer Längsschnittansicht entlang einer in Fig. 2 näher gezeigten Längsschnittebene E3;
- Fig. 4: die Lagervorrichtung gemäß Fig. 2 in einer Schnittansicht entlang einer in Fig. 2 näher gezeigten Querschnittebene E4;
- Fig. 5: die Lagervorrichtung gemäß Fig. 2 in einer dreidimensionalen Einzelansicht in einer Explosionsdarstellung;
- Fig. 6: eine alternative Ausführungsform einer Lageraußenschale der Lagervorrichtung gemäß Fig. 2;
- Fig. 7: eine Fig. 2 entsprechende Darstellung einer Querblattfeder, die mittels einer zweiten Ausführungsform der erfindungsgemäßen Lagervorrichtung an einem Fahrzeugaufbau gelagert ist;
- Fig. 8: eine Längsschnittansicht der Lagervorrichtung gemäß Fig. 7 entlang einer in Fig. 7 näher gezeigten Schnittebene E8;
- Fig. 9: eine Seitenansicht der Lagervorrichtung gemäß Fig.7;
- Fig. 10: eine Querschnittansicht der Lagervorrichtung gemäß Fig. 7 entlang einer in Fig. 7 näher dargestellten Schnittebene E10;
- Fig. 11: eine Fig. 8 entsprechende Darstellung einer zweiten Ausführungsform der in Fig. 7 dargestellten Lagervorrichtung;
- Fig. 12: eine Fig. 10 entsprechende Ansicht der Lagervorrichtung gemäß Fig. 11; und
- Fig. 13 bis Fig. 21: jeweils eine Teilansicht verschiedener Ausführungsformen der Querblattfeder in einem Montagebereich der erfindungsgemäßen Lagervorrichtung.

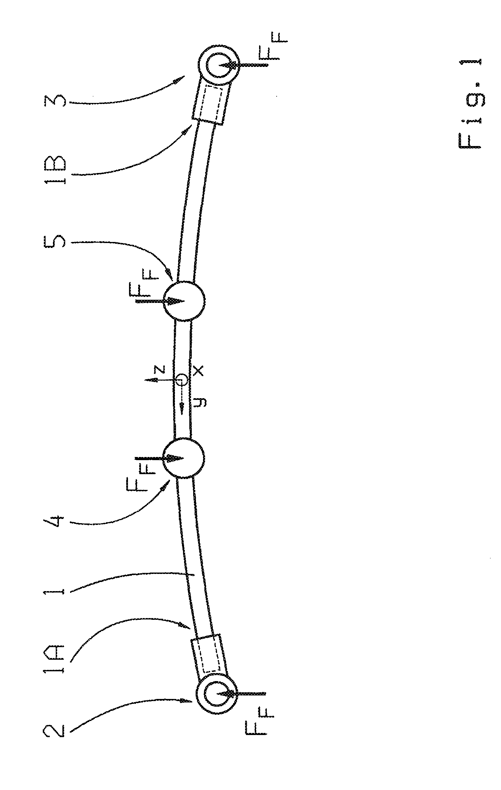

In Fig. 1 ist eine stark schematisierte Darstellung einer Querblattfeder 1 gezeigt, die im Bereich einer Fahrzeugachse eines Fahrzeuges montierbar ist. Die Querblattfeder 1 ist in ihren Rädern der Fahrzeugachse zugewandten Endbereichen 1 A, 1 B in äußeren Lagern 2, 3 bzw. Führungslagern, die vorliegend als sogenannte Lagerschuhe ausgeführt sind, gelagert und mit Radträgern der Fahrzeugachse verbunden.

In mittleren Bereichen der Querblattfeder 1 ist diese über als Zentrallager fungierende Lagervorrichtungen 4, 5 direkt mit einem Fahrzeugaufbau oder mit einem mit dem Fahrzeugaufbau wiederum verbundenen Hilfsrahmen wirkverbunden und an diesem gelagert. Die Lagervorrichtungen 4 und 5 sind symmetrisch zur Mitte der Querblattfeder 1 angeordnet und verbinden diese in der nachfolgend beschriebenen Art und Weise mit dem Fahrzeugaufbau des Fahrzeuges, wobei Drehungen der Querblattfeder 1 im Bereich der Lagervorrichtungen 4 und 5 bei gleich- und wechselseitigen Federungen im erforderlichen Umfang möglich sind, damit über die Querblattfeder 1 bei einem gleichseitigen und einem wechselseitigen Einfedern in den Bereichen 1 A und 1 B unterschiedliche Federraten zur Verfügung stellbar sind.

Die Lagervorrichtungen 4 und 5 weisen in Fahrzeugquerrichtung bzw. in y-Richtung eine hohe Lagersteifigkeit auf und verformen sich in y-Richtung während des Betriebes eines mit der Querblattfeder 1 und den Lagereinrichtungen 4 und 5 ausgeführten Fahrzeuges nur geringfügig, um neben der vorbeschriebenen Federungsfunktionalität auch Radführungsaufgaben übernehmen zu können. Die hohe Lagersteifigkeit in y-Richtung bietet zudem die Möglichkeit, eine Gesamtverschiebung der Querblattfeder 1 in Fahrzeugquerrichtung bzw. in y-Richtung auf einfache Art und Weise zu vermeiden.

Damit der jeweils zwischen den Lagervorrichtungen 4 und 5 und der Querblattfeder 1 für die einwandfreie Funktionalität der Querblattfeder 1 erforderliche Kraftschluss herstellbar ist, sind die beiden Lagervorrichtungen 4 und 5 auch in Fahrzeughochrichtung bzw. in z-Richtung mit einer entsprechend hohen Lagersteifigkeit ausgeführt. Außerdem wird durch die hohe Lagersteifigkeit der Lagervorrichtungen 4 und 5 in Fahrzeughochrichtung erreicht, dass die Querblattfeder 1 bei wechselseitiger Einfederung der Endbereiche 1 A und 1 B nicht das Verschieben eines Starrkörpers im Bereich der Lagervorrichtungen 4 und 5 aufweist. Die Querblattfeder 1 wird bei einer wechselseitigen Einfederung einem sogenannten S-Schlag entsprechend gezielt verformt und stellt eine entsprechend höhere wechselseitige Federrate zur Verfügung.

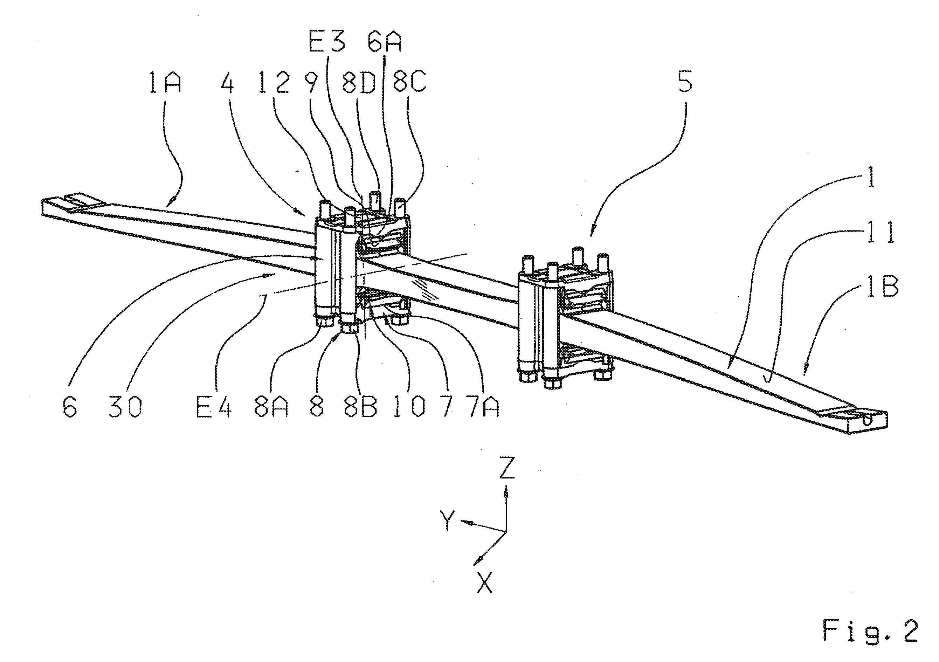

Fig. 2 zeigt eine dreidimensionale Darstellung der Querblattfeder 1, die als ein balkenähnliches Federelement ausgebildet ist. Die Querblattfeder 1 ist über die zwei Lagervorrichtungen 4, 5 mit einem in der Zeichnung nicht näher dargestellten Fahrzeugaufbau und über die beiden Endbereichslagereinrichtungen 2, 3 mit den Rädern einer Fahrzeugachse des Fahrzeuges verbunden und in den Endbereichen 1 A, 1 B gelagert. Die sogenannte Vierpunktlagerung ermöglicht im Bereich der Querblattfeder 1 sowohl eine Hubfederung als auch eine Wankfederung zur Verfügung zu stellen, womit konventionelle Aufbaufedern sowie aus der Praxis bekannte Stabilisatoreinrichtungen nicht vorzusehen sind. Bei entsprechender Ausführung der Lagervorrichtungen 4 und 5 sowie der Endbereichslagerungen 2 und 3 sind über die Querblattfeder 1 neben den letztgenannten Federungsfunktionen auch Radführungsfunktionen zur Verfügung stellbar. Das vorgestellte Federsystem bietet neben einem hohen Kosteneinsparungspotential bei entsprechender Werkstoffwahl zur Herstellung der Querblattfeder 1, beispielsweise Faserverbundwerkstoffe, auch die Möglichkeit der Gewichtsreduzierung im Bereich einer Fahrzeugachse.

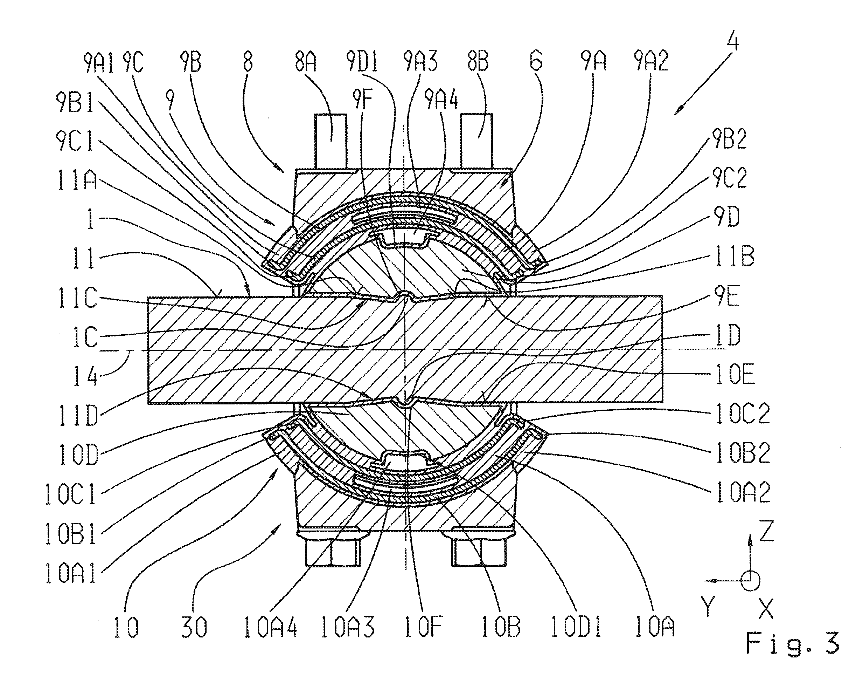

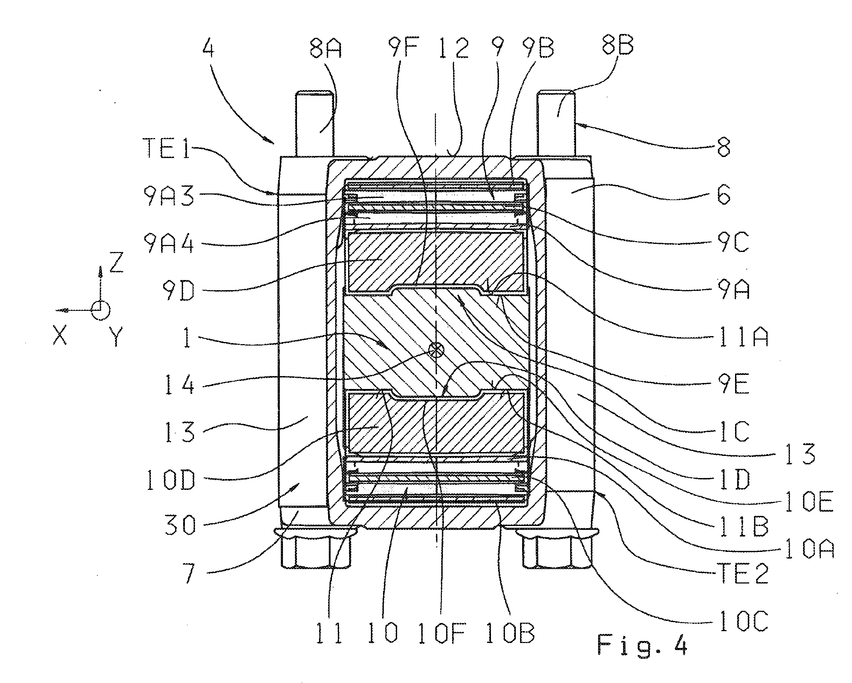

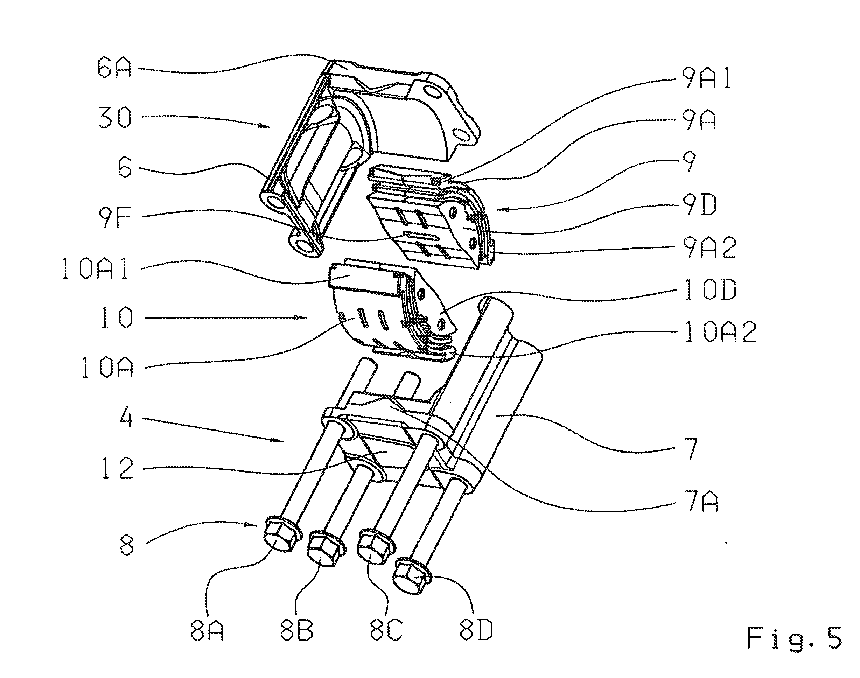

In Fig. 3 ist eine Längsschnittansicht einer in Fig. 2 lediglich durch eine strichpunktierte Linie grafisch näher dargestellte Schnittebene E3 gezeigt, die einer sogenannten yz-Schnittebene entspricht. In Fig. 4 ist eine Querschnittansicht der Lagervorrichtung 4 entlang einer in Fig. 2 ebenfalls als strichpunktierte Linie grafisch wiedergegebene Querschnittebene E4 dargestellt, wobei die Querschnittebene E4 im Wesentlichen einer sogenannten xz-Querschnittebene entspricht. In Fig. 5 ist eine dreidimensionale Explosionsdarstellung der Lagervorrichtung 4 in Einzelansicht grafisch wiedergegeben.

Die Lagervorrichtungen 4 und 5 weisen grundsätzlich den gleichen Aufbau auf, weshalb in der nachfolgenden Beschreibung zu Fig. 2 bis Fig. 6 im Wesentlichen lediglich auf die Lagervorrichtung 4 näher eingegangen wird.

Die Lagervorrichtung 4 weist eine Lageraußenschaleneinrichtung 30 mit zwei miteinander verbindbare Lageraußenschalen 6, 7 auf, die vorliegend über eine vier Schraubenelemente 8A bis 8D umfassende Schraubeneinrichtung 8 miteinander verbunden sind, wobei über die schraubeneinrichtungsseitige Verbindung eine für die Herstellung des Kraftschlusses zwischen der Lagervorrichtung 4 und der Querblattfeder 1 erforderliche Vorspannkraft auf zwischen den Lageraußenschalen 6 und 7 angeordnete Einlegeeinrichtungen 9, 10 aufbringbar ist. Die Lagervorrichtung 4 ist über die Schraubeneinrichtung 8 auch mit dem Fahrzeugaufbau bzw. dem Hilfsrahmen verbindbar.

Die Lageraußenschalen 6 und 7 sind vorliegend winkelförmig bzw. L-förmig ausgebildet und grenzen im Bereich von zwei Trennebenen TE1 und TE2 aneinander an. Zusätzlich sind die Lageraußenschalen 6 und 7 in ihren die Querblattfeder 1 in Fahrzeughochrichtung übergreifenden Bereichen jeweils mit einem Steg 13 ausgebildet, mittels welchen eine Bewegung der Einlegeeinrichtungen 9 und 10 in Fahrzeuglängsrichtung bzw. in x-Richtung begrenzt ist.

Zudem sind die Lageraußenschalen 6 und 7 zur Vereinfachung einer Montage mit Zentriereinrichtungen ausführbar, die in entsprechende Bohrungen der Lageraußenschalen 6 und 7 eingepasste Passstifte umfassen, wobei es im Ermessen des Fachmannes liegt in Abhängigkeit des jeweils vorliegenden Anwendungsfalles zur Zentrierung der Lageraußenschalen 6 und 7 zueinander Feder-Nut-Ausführungen oder dergleichen vorzusehen.

Sowohl die beiden Lageraußenschalen 6 und 7 als auch die Einlegeeinrichtungen 9 und 10 sind vorliegend identisch ausgebildet, um die Herstellkosten der Lagervorrichtung 4 möglichst gering zu halten. Die Einlegeeinrichtungen 9 und 10 sind vorliegend mit drei Lagenelementen 9A bis 9C bzw. 10A bis 10C und jeweils einem im Wesentlichen halbzylindrisch ausgeführten Einlegeteil 9D bzw. 10D ausgebildet. Dabei sind die Lagenelemente 9A und 10A der Einlegeeinrichtungen 9 und 10 vorliegend aus gummielastischem Material hergestellt, welches während einer Vulkanisation auf die aus Blech hergestellten Lagenelementen 9B, 9C bzw. 10B, 10C sowie die vorliegend ebenfalls aus Metall hergestellten Einlegeteile 9D und 10D aufgebracht ist bzw. die Lagenelemente 9B, 9C bzw. 10B, 10C sowie die Einlegeteile 9D bzw. 10D umschließt.

Die Einlegeteile 9D und 10D sind auch aus Kunststoff, Faserverbundwerkstoffen, Naturwerkstoffen, wie Holz, Stein und dergleichen, sowie aus verschiedenen Metallwerkstoffen herstellbar.

Die Lagenelemente 9B, 9C bzw. 10B, 10C sind mit höherer Steifigkeit als die Lagenelemente 9A bzw. 10A ausgeführt und weisen zwischen in axialer Richtung der Querblattfeder 1 orientierten Endbereichen 9B1, 9B2, 9C1, 9C2 bzw. 10B1, 10B2, 10C1, 10C2 halbschalenförmige, im Wesentlichen hohlzylindrisch und konvex ausgebildete Bereiche auf. Die Endbereiche 9B1, 9B2 bzw. 10B1, 10B2 der Lagenelemente 9B bzw. 10B sind in Bezug auf die Oberfläche 11 über konkav gekrümmte Bereiche mit den konvexen Bereichen verbunden und von der Oberfläche 11 der Querblattfeder 1 weggerichtet, Womit lagenelementseitige Beschädigungen der Oberfläche 11 bei großen Auslenkungen der Querblattfeder 1 auf konstruktiv einfache Art und Weise vermieden werden. Beschädigungen der Oberfläche 11 der Querblattfeder 1 sind zusätzlich durch die lagenelementseitige bzw. gummiartige Beschichtung der Lagenelemente 9B, 9C bzw. 10B, 10C und der Einlegeteile 9D bzw. 10D zusätzlich weiter reduziert.

Die zwischen den Einlegeteilen 9D bzw. 10D und Anlageflächen 11 A, 11 B der Querblattfeder 1 vorgesehenen Schutzschichtbereiche der Lagenelemente 9A bzw. 10A schützen die Oberfläche 11 der Querblattfeder 1 bei schwingender Belastung ausreichend gegen unerwünschte Beschädigungen, welche die Lebensdauer der Querblattfeder in unerwünschtem Umfang beeinträchtigen.

Zusätzlich ist auch das Eindringen von feinen Schmutzpartikeln zwischen die Einlegeteile 9D und 10D und die Querblattfeder 1 über die Schutzschicht verhinderbar. Dabei ist es auch denkbar, dass die Einlegeteile 9D und 10D zum Vermeiden eines Schmutzpartikeleintritts mit der Oberfläche 11 der Querblattfeder 1 verklebt werden, wobei dies sowohl bei der Ausführung mit als auch ohne Schutzschicht vorgesehen sein kann.

Des Weiteren sind über die Vulkanisationsschicht der Einlegeteile 9D und 10D Fertigungstoleranzen im Bereich des Formschlusses zwischen der Lagervorrichtung 4 der Querblattfeder 1 ausgleichbar und ein Reibbeiwert zwischen den Einlegeteilen 9D und 10D und der Querblattfeder 1 durch eine geeignete Materialauswahl und eine entsprechende Oberflächenbeschaffenheit der Schutzschicht erhöhbar.

Die Einlegeeinrichtungen 9 und 10 sind über wulstartige Endbereiche 9A1, 9A2 bzw. 10A1, 10A2 der Lagenelemente 9A bzw. 10A formschlüssig mit den Lageraußenschalen 6 bzw. 7 verbunden, womit die Einlegeeinrichtungen 9 und 10 während einer Montage der Lagervorrichtung 4 in y-Richtung gegenüber der Lagerschale 6 bzw. der Lagerschale 7 positioniert sind. Zusätzlich erfolgt eine Positionierung der Einlegeeinrichtungen 9 und 10 in x-Richtung bzw. in Fahrzeuglängsrichtung während der Montage über Zentrierbereiche 6A, 7A der Lageraußenschalen 6 und 7, die in montiertem Zustand der Lagervorrichtung 4 in die wulstartigen Endbereiche 9A1, 9A2 bzw. 10A1, 10A2 der Lagerelemente 9A bzw. 10A formschlüssig eingreifen.

Die beiden Lageraußenschalen 6 und 7 werden während der Montage auf die Einlegeeinrichtungen 9 und 10 aufgesteckt und durch Einkerbungen der wulstartigen Endbereiche 9A1, 9A2 bzw. 10A1, 10A2, in die die Vorsprünge 6A, 7A der Lageraußenschalen 6 und 7 eingreifen, in den Lageraußenschalen 6 und 7 positioniert.

Die Integration der Blechlagen bzw. Lagenelemente 9B und 9C bzw. 10B, 10C in die gummielastischen Lagenelemente 9A und 10C ist zum Einstellen der geforderten Lagersteifigkeiten vorgesehen. Zusätzlich sind im Bereich der Lagenelemente 9A und 10A Hohlräume bzw. Aussparungen 9A3, 9A4 bzw. 10A3, 10A4 vorgesehen, um die Lagersteifigkeit der Lagervorrichtung 4 an die vorliegenden Anforderungen anzupassen. Die Einlegeteile 9D und 10D sind jeweils in den Lagenelementen 9C bzw. 10C zugewandten Bereichen mit Ausnehmungen 9D1 bzw. 10D1 ausgebildet.

Des Weiteren sind die Einlegeeinrichtungen 9 und 10 in den Auflageflächen 11 A und 11B der Querblattfeder 1 zugewandten Anlageflächen 9E und 10E jeweils mit wenigstens einer Aufnahmeeinrichtung 9F bzw. 10F ausgeführt, in die jeweils ein Bereich 1C bzw. 1D der Querblattfeder 1 in montiertem Zustand der Einlegeeinrichtungen 9 und 10 formschlüssig eingreift. Zusätzlich weist die Querblattfeder 1 in Fahrzeughochrichtung bzw. in z-Richtung im Bereich der Auflageflächen 11A und 11B jeweils für die Einlegeeinrichtungen 9 bzw. 10 Ausnehmungen 11C, 11D auf, in die die Einlegeeinrichtungen 9 und 10 über die entsprechend ausgeformten Einlegeteile 9D und 10D formschlüssig eingreifen, um im Betrieb eines Fahrzeuges eine Relativbewegung der Querblattfeder 1 in Fahrzeugquerrichtung bzw. in y-Richtung gegenüber dem Fahrzeugaufbau neben der kraftschlüssigen Verbindung mit der Lagervorrichtung 1 auch über einen zusätzlichen Formschluss zwischen der Querblattfeder 1 und der Lagervorrichtung 4 auf konstruktiv einfache Art und Weise zu vermeiden.

Die Ausnehmungen 11C und 11D bzw. die Konturen der Ausnehmungen 11C und 11 D sind derart ausgeführt, dass im Anlagebereich der Lagervorrichtung 4 an der Querblattfeder 1 im Betrieb eine möglichst gleichmäßige Spannungsverteilung vorliegt, die die Lebensdauer der Querblattfeder 1 günstig beeinflusst. Die Kontur der Ausnehmungen 11C und 11 D entspricht jeweils im Wesentlichen einer speziellen kosinusförmigen Vertiefung in y-Richtung, womit eine möglichst gleichmäßige Spannungsverteilung im Lagerbereich der Querblattfeder 1 erreicht wird. Die Lageraußenschalen 6 und 7 sind jeweils mit Anlageflächen 12 zum Fahrzeugaufbau bzw. zu dem mit dem Fahrzeugaufbau wirkverbundenen Hilfsrahmen ausgebildet, um einen möglichst direkten Kraftfluss zwischen der Lagervorrichtung 4 und dem Fahrzeugaufbau zu gewährleisten. Abweichend hiervon besteht jedoch auch die Möglichkeit, dass die Lagerschalen 6 und 7 zumindest bereichsweise unterschiedlich ausgebildet sind, um die Lagervorrichtung 4 an vorhandene Bauräume anzupassen oder sogenannte Poka-Yoke-Anforderungen umzusetzen, die eine Falschmontage der Lagervorrichtung 4 wirkungsvoll verhindern.

Zusätzlich wird über den Formschluss zwischen der Querblattfeder 1 und der Lagervorrichtung 4 auch die Position der Lagervorrichtung 4 an der Querblattfeder 1 definiert, die für die Gesamtfunktion des Systems wesentlich ist.

Die Querblattfeder 1 ist vorliegend mit einem variablen Querschnitt ausgebildet. Um den Faseranteil im Querschnitt der Querblattfeder 1 möglichst konstant zu halten besteht die Möglichkeit, dass die Querblattfeder 1 im Montagebereich der Lagervorrichtungen 4 und 5 in Fahrzeuglängsrichtung jeweils mit einer im Vergleich zum übrigen Querschnitt leichten Verbreiterung ausgeführt ist. Alternativ hierzu besteht auch die Möglichkeit, dass die Querblattfeder 1 über die gesamte Länge mit einem konstanten Querschnitt ausgeführt ist.

Die Querblattfeder 1 ist im Bereich ihrer Oberfläche 11 zumindest im Anlagebereich mit den Lagervorrichtungen 4 und 5 mit einer speziellen Oberflächenbeschichtung und/oder Oberflächenbehandlung ausgeführt, um die Härte der Oberfläche 11 der Querblattfeder 1 gegenüber der übrigen Oberfläche 11 zu erhöhen und/oder im Bereich des Formschlusses zwischen der Querblattfeder 1 und der Lagervorrichtungen 4 und 5 den Reibbeiwert zur Erhöhung der Verbindungskräfte anzuheben. Zusätzlich besteht über eine spezielle Oberflächenbeschichtung und/oder Oberflächenbehandlung der Oberfläche 11 der Querblattfeder 1 die Möglichkeit, dass ein Fertigungsprozess für die Herstellung der Bereiche 1C und 1 D der Querblattfeder 1, beispielsweise der Entformungsvorgang der Querblattfeder 1 aus dem Werkzeug, erleichtert bzw. vereinfacht wird.

Als Oberflächenbeschichtung sind beispielsweise eine Klebeschicht, eine Lackschicht, ein Kunststoffmaterial sowie eine mit Nanopartikeln ausgeführte Kunststoffschicht denkbar. Während einer Oberflächenbehandlung wird die Oberfläche 11 der Querblattfeder 1 beispielsweise mit einer die Adhäsionseigenschaft der Oberfläche erhöhenden Flüssigkeiten vorbehandelt und anschließend werden die Härte oder den Reibbeiwert erhöhende Partikel auf die Oberfläche der Querblattfeder im genannten Bereich beispielsweise durch Aufdampfen aufgebracht.

Die Lagervorrichtung 4 wird durch die vier Schraubenelemente 8A bis 8D vorgespannt, wobei durch die form- und kraftschlüssige Verbindung zwischen der Lagervorrichtung 4 und der Querblattfeder 1 jeweils hohe Lagersteifigkeiten in z-Richtung und y-Richtung bei gleichzeitig geringer Torsionssteifigkeit um die Fahrzeuglängsachse zur Verfügung stellbar sind. Während der Montage der Lagervorrichtung 4 werden die Einlegeeinrichtungen 9 und 10 auf der Oberund Unterseite der Querblattfeder 1 aufgebracht und durch die in die Einlegeeinrichtungen 9 und 10 eingreifenden Bereiche 1C und 1 D der Querblattfeder 1 in Fahrzeugquerrichtung bzw. in y-Richtung auf der Querblattfeder 1 zentriert, wodurch eine genaue Fixierung der Lagervorrichtung 4 auf der Querblattfeder 1 gewährleistet ist.

Der Drehpunkt der beiden Einlegeeinrichtungen 9 und 10 liegt in montiertem Zustand der Lagervorrichtungen 4 und 5 im Wesentlichen auf der neutralen Faser der Querblattfeder 1, womit Verformungen im Bereich der Einlegeeinrichtungen 9 und 10 vorteilhafterweise im Wesentlichen gleich groß sind. Die in Fahrzeugquerrichtung bevorzugt kosinusförmigen Ausnehmungen 11C und 11 D der Querblattfeder 1 sind zur formschlüssigen Verbindung der Lagervorrichtung 4 mit der Querblattfeder 1 vorgesehen, wobei die kosinusförmige Ausgestaltung bzw. der kosinusförmige Übergang zwischen der Oberfläche 11 der Querblattfeder 1 außerhalb der Ausnehmungen 11C und 11 D und der Auflageflächen 11 A und 11 B im Bereich der Ausnehmungen 11C und 11 D einen möglichst sanften Übergang im Verlauf der einzelnen Fasern der vorliegend aus Verbundmaterial hergestellten Querblattfeder 1 gewährleistet. Der sanfte Übergang im Faserverlauf der Querblattfeder 1 verhindert auf einfache Art und Weise eine Beeinträchtigung der Lebensdauer der Querblattfeder 1.

Die Lageraußenschalen 6 und 7 sind bei dem in Fig. 2 bis Fig. 5 dargestellten Ausführungsbeispiel der Lagervorrichtung 4 als Eisengussbauteile ausgeführt, die in montiertem Zustand zwei Trennebenen aufweisen.

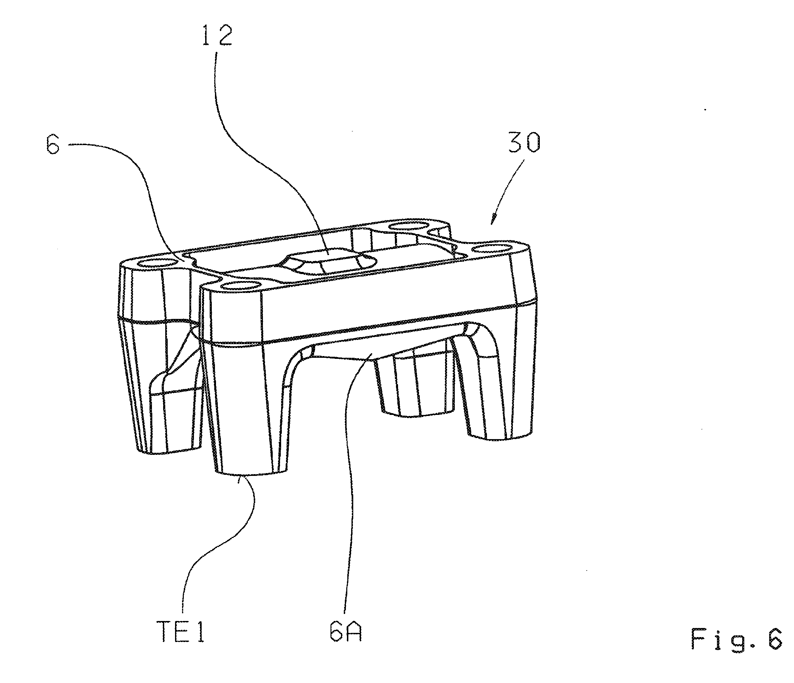

Eine hierzu alternative Ausführungsform der Lageraußenschalen 6 und 7 zeigt Fig. 6, welche im Querschnitt eine im Wesentlichen U-förmige Ausgestaltung aufweist. Die Lageraußenschale 6 bzw. 7 gemäß Fig. 6 ist ebenfalls als Eisengussbauteil ausgeführt und grenzt im Bereich einer Trennebene an die jeweils andere Lageraußenschale 7 bzw. 6 an. Die obere und untere Seite der Lageraußenschalen 6 und 7 sind somit jeweils während eines Arbeitsganges bearbeitbar.

In Abhängigkeit des jeweils vorliegenden Anwendungsfalles besteht auch die Möglichkeit, dass die Lageraußenschalen aus Stahl, Aluminium oder einem anderen geeigneten Material hergestellt sind. Zudem können die Lageraußenschalen auch als Kaltfließpressteil ausgeführt sein.

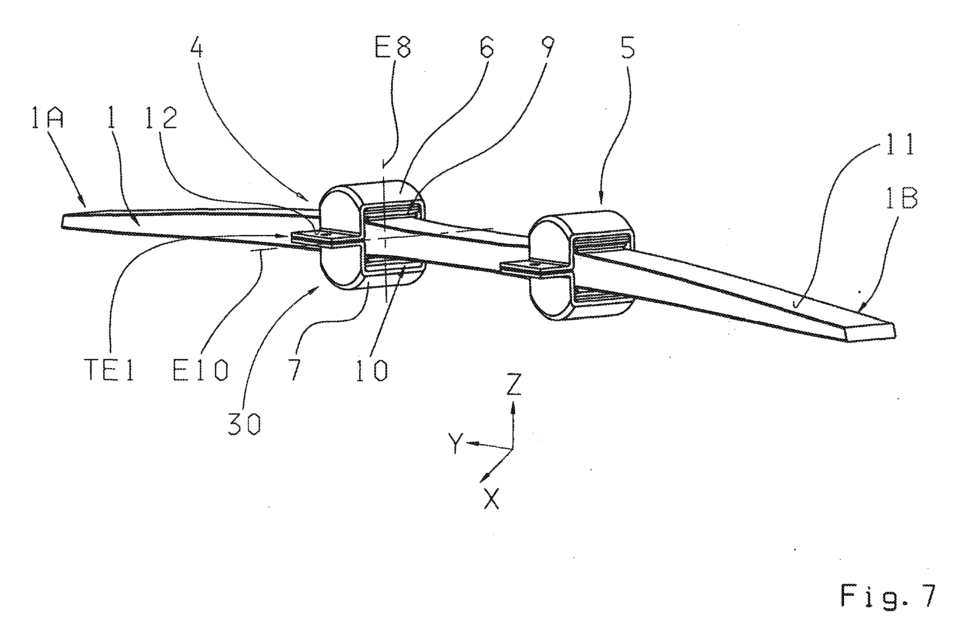

Fig. 7 zeigt eine Fig. 2 entsprechende Darstellung der Querblattfeder 1, welche über eine zweite Ausführungsform der Lagervorrichtungen 4 und 5 mit dem Fahrzeugaufbau verbunden ist. Die Lagervorrichtungen 4 und 5 sind grundsätzlich gleich aufgebaut, weshalb in der nachfolgenden Beschreibung wiederum im Wesentlichen lediglich auf die Lagervorrichtung 4 Bezug genommen wird.

Die Lageraußenschalen 6 und 7 sind als Blechschalen ausgebildet, die mit dem Hilfsrahmen oder direkt mit dem Fahrzeugaufbau verbindbar sind. Abweichend hierzu können die Lageraußenschalen auch als Gussteile oder als Kaltmassivumformteile ausgeführt sein.

Zur Reduktion der Herstellkosten sind die Lageraußenschalen 6 und 7 symmetrisch gestaltet. In vorbeschriebener Art und Weise umfassen die Lageraußenschalen 6 und 7 die Einlegeeinrichtungen 9 und 10, die jeweils mehrteilig aufgebaut sind und ein zumindest bereichsweise elastisch ausgeführtes Element umfassen, was in den Schnittdarstellungen 8 bis 10 bzw. 11 und 12 jeweils näher gezeigt ist.

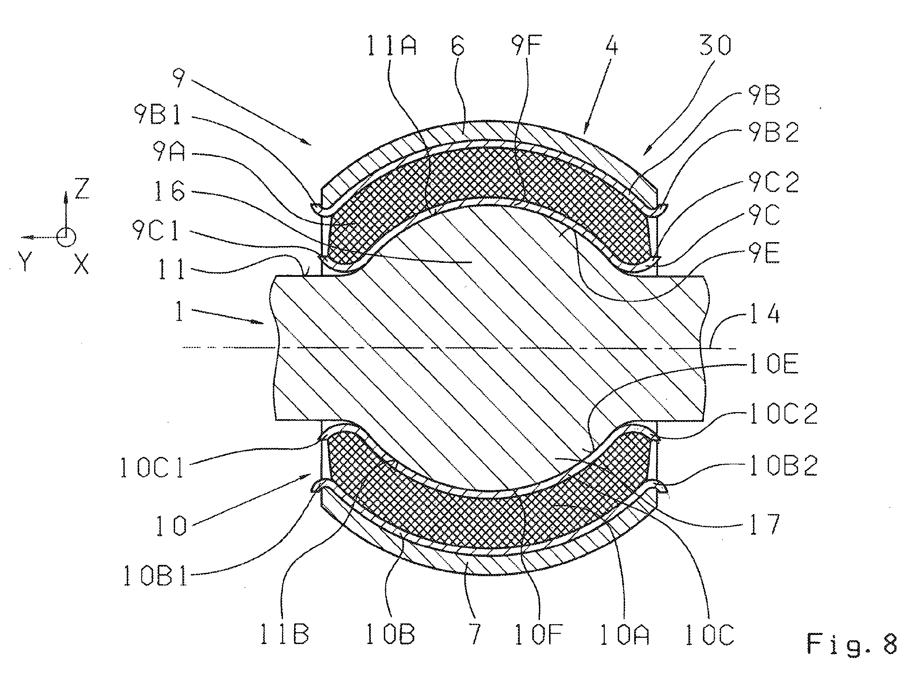

Bei dem in Fig. 8 bis Fig. 10 dargestellten Ausführungsbeispiel der Querblattfeder 1 weist diese in den Anlagebereichen der Lagervorrichtung 4 an der Querblattfeder 1 jeweils Erhöhungen 16, 17 auf, auf die die Einlegeeinrichtungen 9 und 10 mit den Lagenelementen 9A bis 9C bzw. 10A bis 10C aufgelegt sind. Die Erhöhungen 16 und 17 übernehmen im Wesentlichen die Funktionalität der Einlegeteile 9D bzw. 10D der Einlegeeinrichtungen 9 und 10 gemäß Fig. 2 bis Fig. 5.

Um die Lagervorrichtung 4 mit der gewünschten Lagersteifigkeit zur Verfügung stellen zu können, sind die Einlegeeinrichtungen 9 und 10 abweichend von der in Fig. 8 bis Fig. 10 dargestellten Ausführungsform mit zusätzlichen die Steifigkeit erhöhenden und als Einlegebleche ausgebildeten Lagenelementen oder im Bereich des Lageelementes 9A bzw. 10A mit Ausnehmungen ausführbar.

Die Lagenelemente 9C bzw. 10C der Einlegeeinrichtungen 9 und 10 sind bei dem in Fig. 8 bis Fig. 10 dargestellten Ausführungsbeispiel zwischen den gummielastischen Lagenelementen 9A bzw. 10A und der Querblattfeder 1 angeordnet und sind in Abhängigkeit des jeweils vorliegenden Anwendungsfalles aus Metall, Kunststoffen, verstärkten Kunststoffen oder faserverstärkten Kunststoffen herstellbar. Die Lagenelemente 9C und 10C sind vorliegend durch Vulkanisation jeweils mit den gummielastischen Lagenelementen 9A und 10A verbunden, wobei in Abhängigkeit des jeweils vorliegenden Anwendungsfalles auch eines der Lagenelemente 9B, 9C bzw. 10B, 10C entfallen kann.

Das direkt auf der Querblattfeder 1 angeordnete Lagenelement ist derart auszuführen, dass die Oberfläche 11 der Querblattfeder 1 im Betrieb nicht durch das Lagenelement beschädigt wird. Aus diesem Grund sind die Lagenelemente 9B, 9C und 10B, 10C in ihren Endbereichen 9B1, 9B2, 9C1, 9C2, 10B1, 10B2, 10C1, 10C2 mit abgerundeten und in Bezug auf die Oberfläche 11 der Querblattfeder 1 nach außen gebogenen Enden ausgebildet, wobei die gekrümmten bzw. aufgebogenen Enden 9B1, 9B2 und 10B1, 10B2 der Lagenelemente 9B und 10B eine Zentrier- bzw. Positionierfunktion der Einlegeeinrichtungen 9 und 10 gegenüber den Lageraußenschalen 6 und 7 zur Verfügung stellen und ein Verrutschen der Einlegeeinrichtungen 9 und 10 gegenüber den Lageraußenschalen 6 und 7 während extremer Lagerbelastungen unterbinden bzw. verhindern.

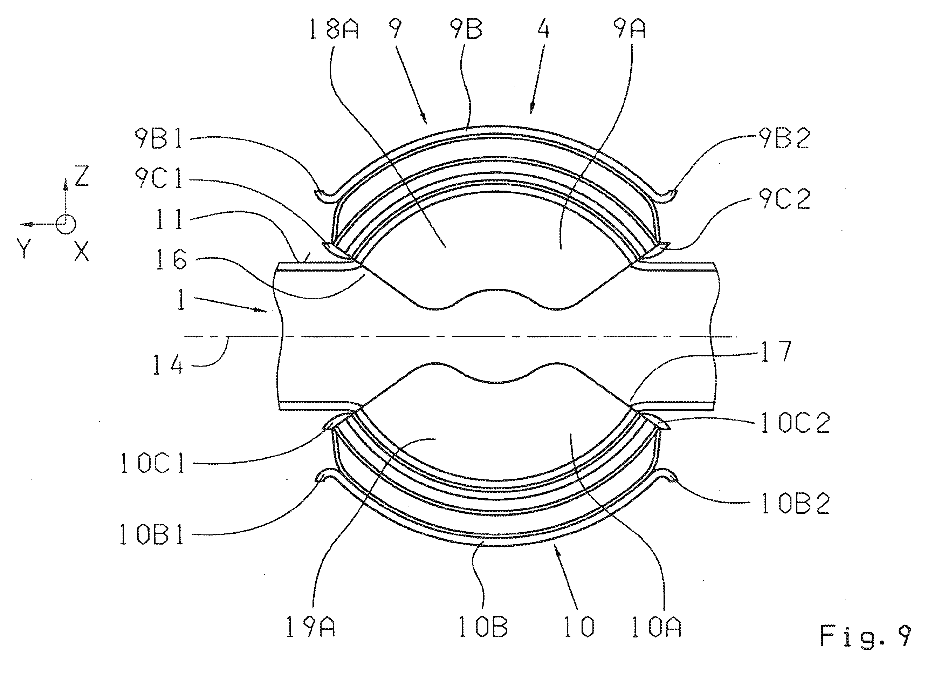

In Fig. 9 ist eine Seitenansicht der Querblattfeder 1 und der Lagervorrichtung 4 ohne die Lageraußenschalen 6 und 7 gezeigt. Aus der Darstellung gemäß Fig. 9 geht hervor, dass die gummielastischen Lagenelemente 9A und 10A jeweils mit seitlich angeordneten elastischen Anschlagbereichen 18, 19 ausgebildet sind, die in montiertem Zustand der Lagervorrichtung 4 zwischen den sich in Fahrzeughochrichtung z erstreckenden Seitenflächen der Querblattfeder 1 und den Lageraußenschalen 6 und 7 angeordnet sind. Über die Anschlagbereiche 18 und 19 sind die Einlegeeinrichtungen 9 und 10 in Fahrzeuglängsrichtung x an der Querblattfeder 1 positioniert und bieten eine weiche Abstützung der Querblattfeder 1 in x-Richtung bzw. in Fahrzeuglängsrichtung an den Lageraußenschalen 6 und 7.

Die Anschlagbereiche 18 und 19 sind in der der Querblattfeder 1 zugewandten Anlagebereichen und/oder in den den Lageraußenschalen zugewandten Anlagebereichen mit wenigstens annähernd in Fahrzeuglängsrichtung orientierten Vorsprüngen und/oder Ausnehmungen ausführbar, um unterschiedliche Lagersteifigkeiten der Lagervorrichtung 4 über der Lagerverschiebung darstellen zu können. Zudem sind die Anschlagbereiche der Einlegeeinrichtungen 9 und 10 in Bezug auf die Fahrzeuglängsrichtung vorne und hinten unterschiedlich ausführbar, um entsprechend unterschiedliche Lagercharakteristiken zur Verfügung stellen zu können.

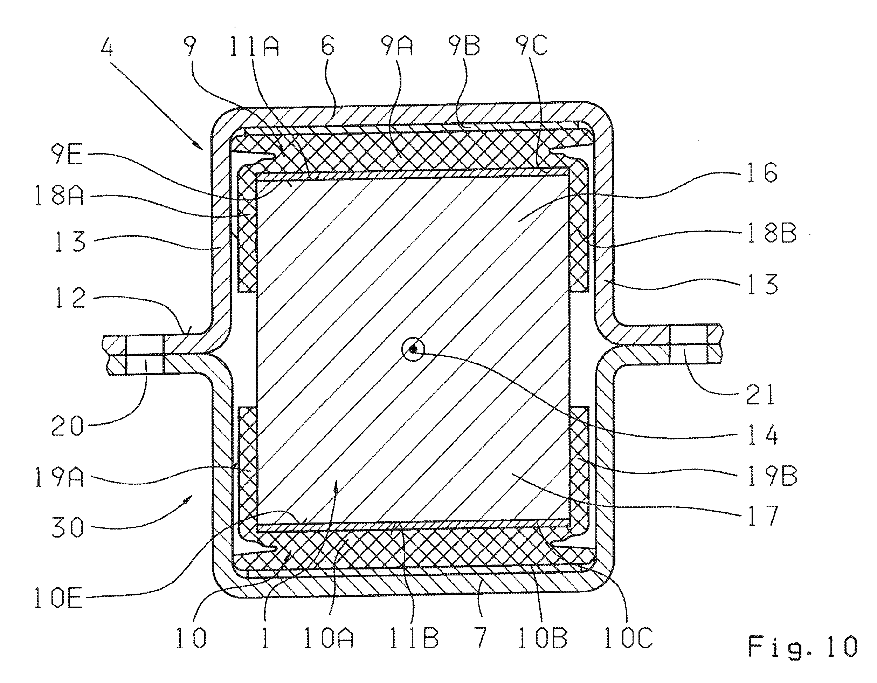

In Fig. 10 sind die in Fahrzeuglängsrichtung beidseitig der Querblattfeder 1 vorgesehenen Anschlagbereiche 18A, 18B und 19A, 19B der Einlegeeinrichtungen 9 und 10 dargestellt. Die Lageraußenschalen 6 und 7 sind im Bereich von Bohrungen 20, 21 über die in Fig. 10 nicht näher dargestellte Schraubeneinrichtung 8 wenigstens über zwei Schraubenelemente miteinander verbunden und auch fahrzeugaufbauseitig bzw. am Hilfsrahmen befestigbar.

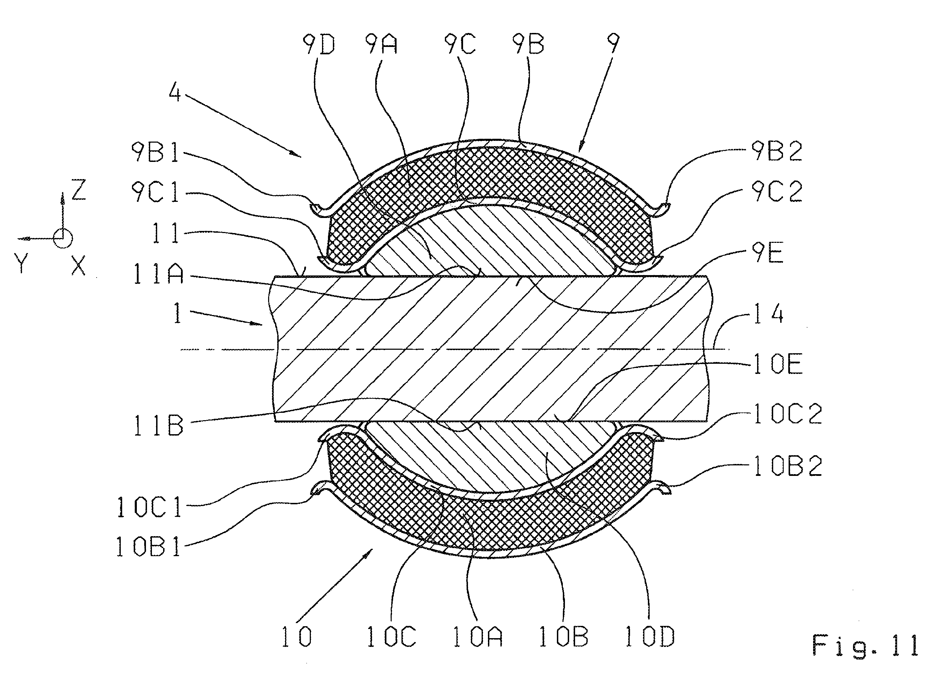

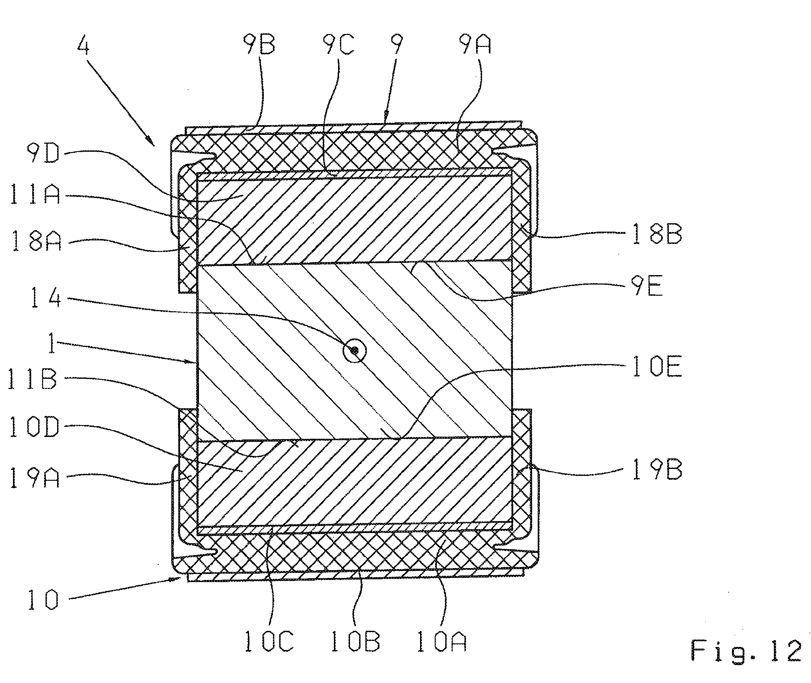

Fig. 11 und Fig. 12 zeigen ein weiteres Ausführungsbeispiel der Querblattfeder 1 und der Lagervorrichtung 4 bzw. 5, bei welcher die Querblattfeder 1 im Anlagebereich der Lagervorrichtung 4 ohne die Erhöhungen 16 und 17 der Querblattfeder 1 gemäß Fig. 8 bis Fig. 10 ausgebildet ist und die Einlegeeinrichtungen 9 und 10 wiederum mit Einlegeteilen 9D und 10D ausgeführt sind. Die Einlegeteile 9D und 10D übertragen die Kraft von der Querblattfeder 1 auf die mehrteilig aufgebauten und bereichsweise gummielastisch ausgebildeten Einlegeeinrichtungen 9 und 10, die die wirkenden Kräfte wiederum in die Lageraußenschalen 6 und 7 einleiten.

Die Einlegeteile 9D und 10D sind bei der Lagervorrichtung 4 gemäß Fig. 11 und Fig. 12 jeweils zwischen der Oberfläche 11 der Querblattfeder und den Lagenelementen 9C bzw. 10C angeordnet. Der weitere Aufbau der Einlegeeinrichtungen 9 und 10 entspricht im Wesentlichen dem Aufbau der Einlegeeinrichtungen 9 und 10 gemäß Fig. 8 bis Fig. 10.

Die Einlegeteile 9D und 10D der Einlegeeinrichtungen 9 und 10 können in Abhängigkeit des jeweils vorliegenden Anwendungsfalles beispielsweise durch Vulkanisation mit dem gummielastischen Lagenelement 9A bzw. 10A verbunden sein, um eine Montage der Lagervorrichtung 4 zu vereinfachen und gegebenenfalls die Einlegeteile 9D und 10D mit gummielastischen Schutzschichten zu versehen, die auf einfache Art und Weise im Betrieb eines Fahrzeuges Beschädigungen der Oberfläche 11 der Querblattfeder 1 verhindern bzw. reduzieren.

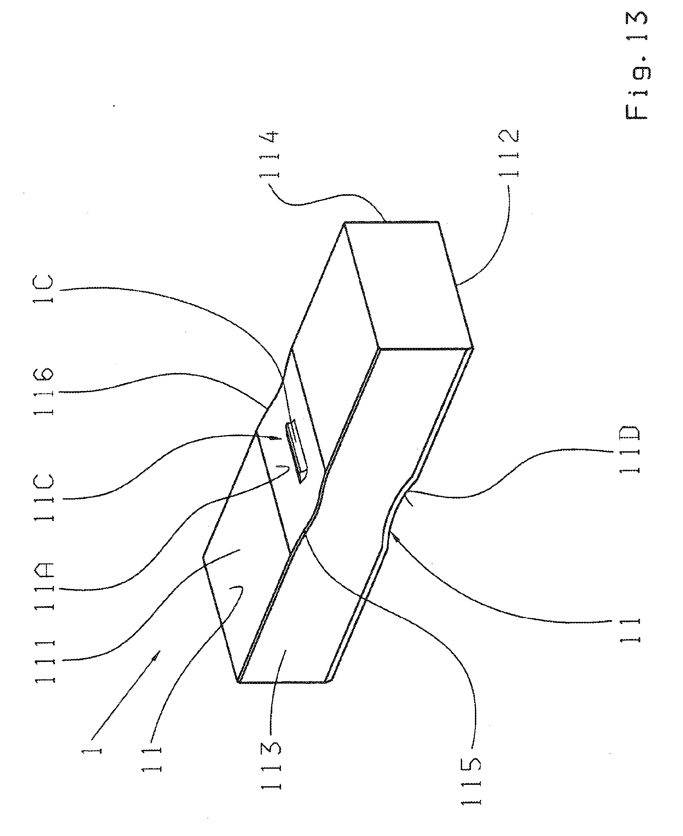

Fig. 13 bis Fig. 21 zeigen verschiedene Ausführungsformen der den Formschluss zwischen der Querblattfeder 1 und der Lagervorrichtung 4 herstellenden Bereiche der Querblattfeder 1. Die in Fig. 13 bis Fig. 21 dargestellten Ausführungsformen unterscheiden sich jeweils lediglich in Teilbereichen, weshalb in der nachfolgenden Beschreibung jeweils lediglich auf die Unterschiede zwischen den einzelnen Ausführungsformen eingegangen wird und bezüglich der weiteren Funktionalität der Ausnehmungen auf die Beschreibung zu Fig. 13 verwiesen wird.

Bei der in Fig. 13 dargestellten Ausführungsform ist die Querblattfeder 1 in Fahrzeughochrichtung bzw. in z-Richtung verstärkt komprimiert und mit der gleichen Breite wie im übrigen Querschnittbereich der Querblattfeder 1 ausgebildet. Dadurch liegt im komprimierten Bereich bzw. im Bereich der Ausnehmungen 11C und 11 D der Querblattfeder 1 ein erhöhter Faseranteil vor. Aufgrund der Ausnehmungen 11C und 11 D sind im Bereich der Lagervorrichtung 4 wirkende erhöhte Querkräfte sicher von der Querblattfeder 1 in die Lagervorrichtung 4 einleitbar. Der Übergang zwischen den Ausnehmungen 11C und 11 D und der angrenzenden Oberfläche 11 der Querblattfeder 1 ist vorliegend über eine Kosinuskontur mit tangentialen Ein- und Ausläufen derart spannungsoptimiert ausgelegt, dass im Bereich der Ausnehmungen 11C und 11 D im Betrieb lediglich geringe Spannungsüberhöhungen auftreten.

Die Bereiche 1C und 1 D der Querblattfeder 1 übernehmen im Wesentlichen lediglich die Aufgabe der Zentrierung der Lagervorrichtung 4 in Längsund Querrichtung auf der Querblattfeder 1, während die Bereiche 1C und 1 D an der Kraftweiterleitung zwischen der Lagervorrichtung 4 und der Querblattfeder 1 nur in geringem Umfang oder überhaupt nicht beteiligt sind. Die Formen der Bereiche 1C und 1 D sind jeweils mit sanften Übergängen zu den Ausnehmungen 11C und 11 D ausgeführt, wobei sich in den Bereichen 1C und 1 D im Wesentlichen Harz während der Herstellung der Querblattfeder ansammelt. Aufgrund dieser Vorgehensweise wird eine abrupte Faserumlenkung im Querschnitt der Querblattfeder 1 vermieden.

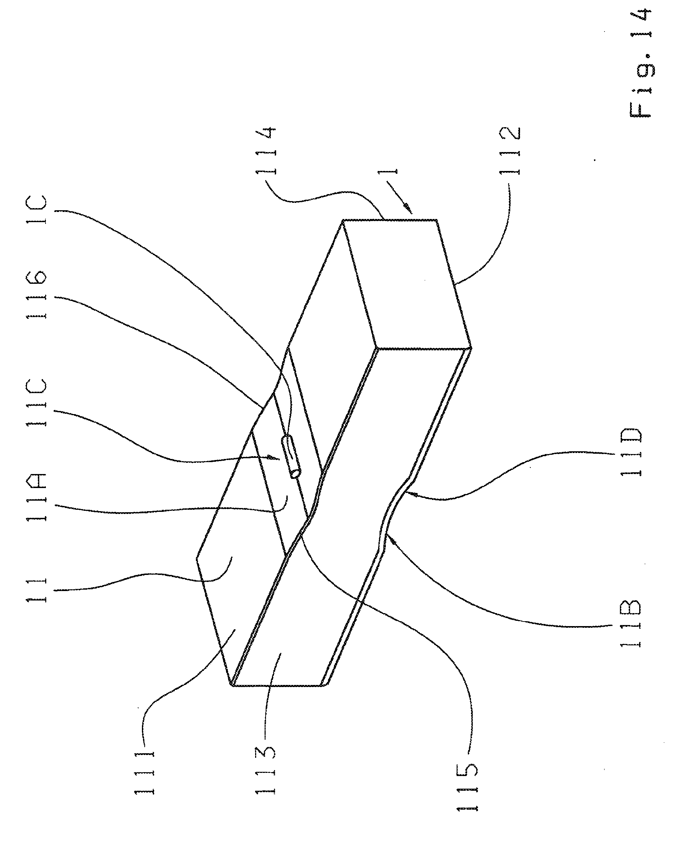

Bei der in Fig. 14 dargestellten Ausführungsform der Querblattfeder 1 sind die Bereiche 1C und 1 D mit weniger sanften Übergängen zu den Ausnehmungen 11C und 11 D ausgeführt und weisen im Wesentlichen eine wenigstens annähernd halbzylindrische Außenform auf. Die halbzylindrische Außenform bietet im Vergleich zu der in Fig. 13 dargestellten Form der Bereiche 1C und 1 D eine vereinfachte Herstellbarkeit des Werkzeuges, welches zur Fertigung der Querblattfeder 1 verwendet wird. Die Bereiche 1C und 1 D des in Fig. 14 dargestellten Ausführungsbeispieles der Querblattfeder 1 übernehmen im Wesentlichen wiederum lediglich die Zentrierung der Lagervorrichtung 4 in Längs- und Querrichtung an der Querblattfeder 1 und sind an der Kraftübertragung zwischen der Lagervorrichtung 4 und der Querblattfeder 1 nur geringfügig bzw. überhaupt nicht beteiligt. Die Formen der Bereiche 1C und 1 D sind wiederum derart, dass die Fasern der Querblattfeder 1 keine wesentliche Umlenkung aufweisen und dass eine Festigkeit der Querblattfeder 1 der Festigkeit von Querblattfedern, welche ohne die Bereiche 1C und 1 D ausgeführt sind, entspricht.

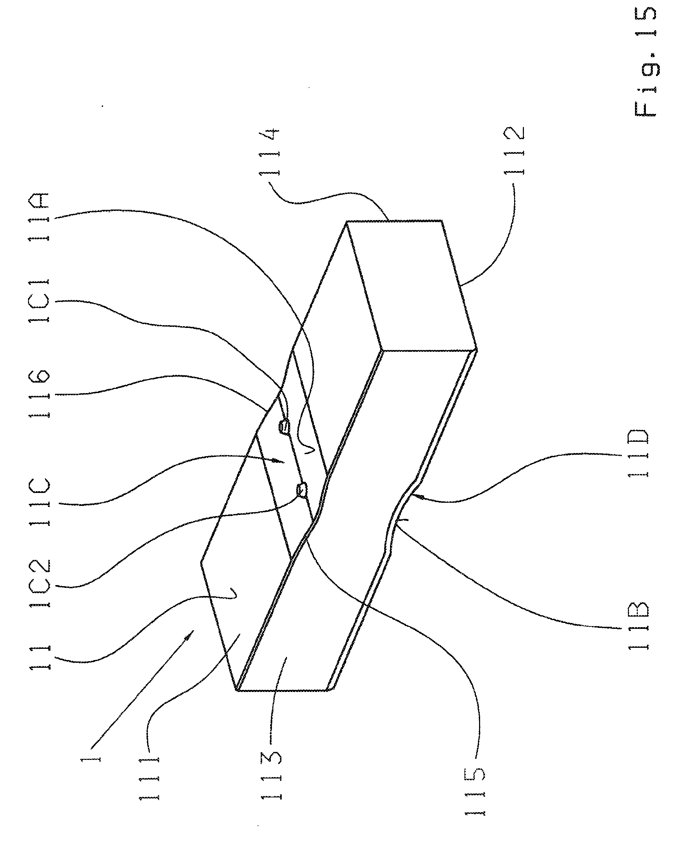

Bei dem in Fig. 15 gezeigten Ausführungsbeispiel der Bereiche 1C und 1 D sind diese mit zwei im Bereich der Außenseiten der Querblattfeder angeordneten wenigstens annähernd kegelstumpfartig ausgeführten Nasen ausgestaltet, über die die Zentrierung der Lagervorrichtung 4 auf der Querblattfeder 1 realisiert ist. Die Bereiche 1C und 1 D sind wiederum im Wesentlichen Harzansammlungen, um abrupte Umlenkungen der Fasern im Bereich der Ausnehmungen bzw. der Bereiche 1C und 1 D zu vermeiden.

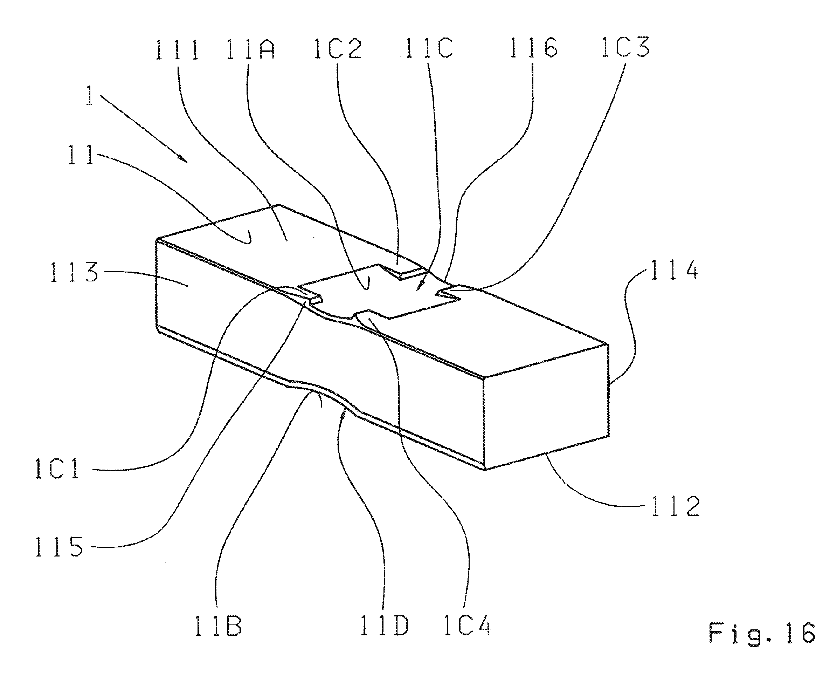

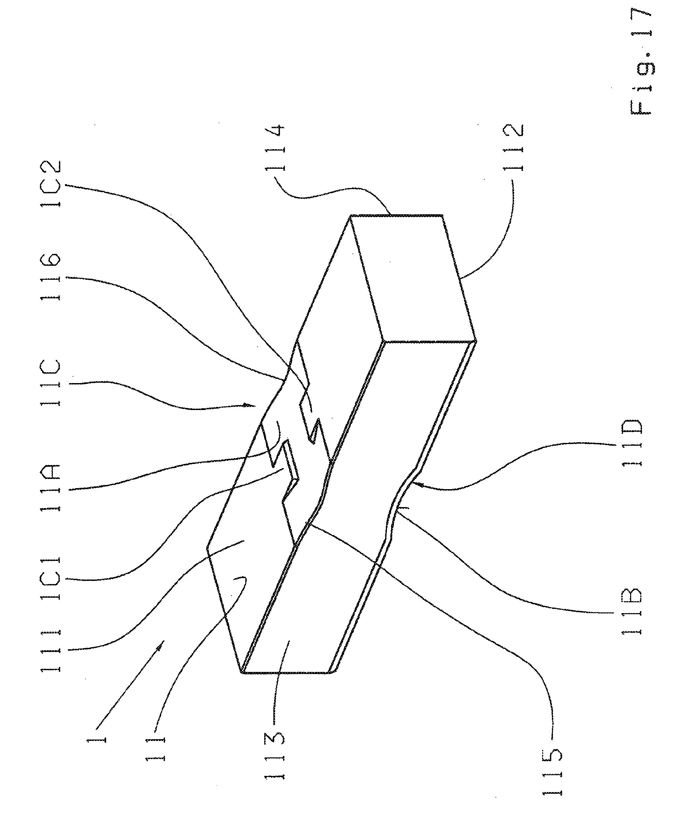

Die Bereiche 1C und 1 D sind bei dem weiteren Ausführungsbeispiel der Querblattfeder 1 gemäß Fig. 16 als im Bereich der Außenseiten der Querblattfeder 1 angeordnete Nasen 1 C1 bis 1 C4 ausgebildet, wobei die Übergänge zwischen den Ausnehmungen 11C, 11 D und den Nasen 1C1 bis 1 C4 wiederum spannungsoptimiert gestaltet ist. Bei dem Ausführungsbeispiel der Querblattfeder 1 gemäß Fig. 17 sind die Bereiche 1C und 1 D mit im mittleren Bereich der Querblattfeder 1 angeordneten Nasen 1C1 und 1 C2 abgebildet.

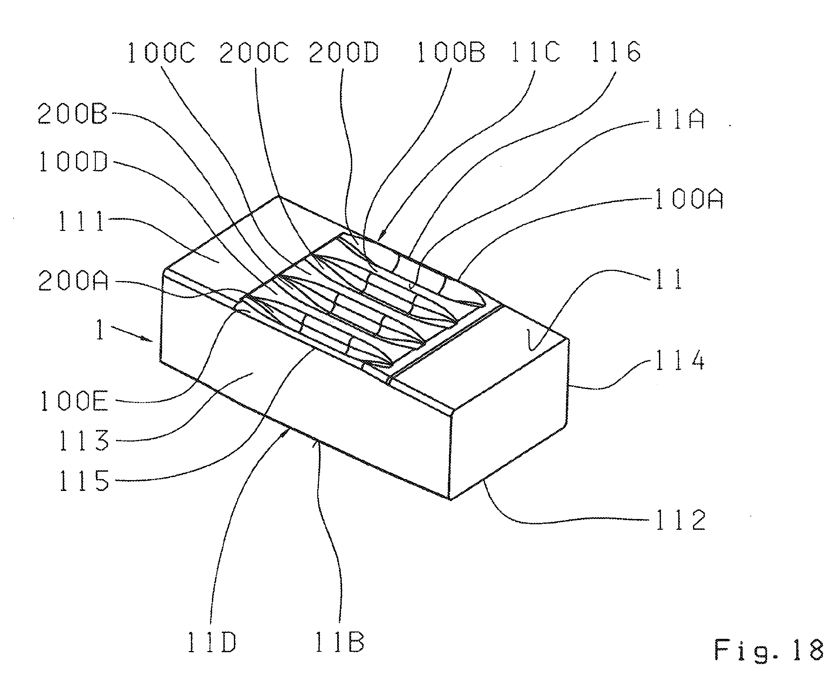

Die in Fig. 18 dargestellte weitere Ausführungsform der Querblattfeder 1 ist im Bereich der Ausnehmungen 11C und 11 D der Querblattfeder 1 mit sich in komprimiertem Zustand der Querblattfeder 1 in Fahrzeugquerrichtung erstreckenden und alternierend angeordneten Rippen 100A bis 100E und Rillen 200A bis 200D ausgestaltet, welchen die Funktion der Bereiche 1C und 1 D zugrunde liegt. Die Anzahl der Rippen 100A bis 100E wird abhängig von der Breite der Querblattfeder 1 und der Tiefe der Rillen 200A bis 200D ausgewählt, wobei die seitlichen Rippen 100A und 100E bedarfsweise auch weggelassen werden können. Im Bereich der Rillen 200A bis 200D wird der Faseranteil der Querblattfeder komprimiert bzw. teilweise auf die Rippen 100A bis 100E umverlagert, wobei die Übergänge zwischen den Rippen 100A bis 100E und den Rillen 200A bis 200D sowie zwischen der verbleibenden Oberfläche 11 der Querblattfeder 1 spannungsoptimiert ausgelegt sind, um nur geringe Spannungsüberhöhungen in den Übergängen zu erzeugen. Die Tiefe der Rillen 200A und 200D variiert in Fahrzeugquerrichtung sowie in Fahrzeuglängsrichtung und weist in einem mittleren Bereich im Wesentlichen jeweils sein Maximum und in Fahrzeugquerrichtung gegenüberliegenden Randbereichen jeweils sein Minimum auf.

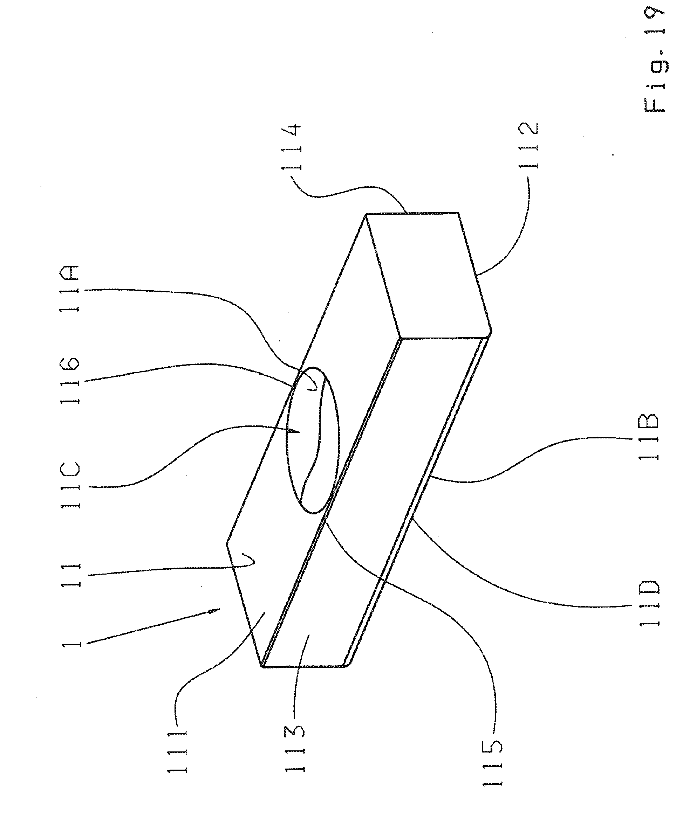

Die in Fig. 19 dargestellte Ausführungsform der Querblattfeder 1 ist mit Ausnehmungen 11C und 11 D ausgebildet, die jeweils eine rotierte Kosinuskontur aufweisen und jeweils in die Oberfläche 11 der Querblattfeder 1 eingeprägt sind. Die Ausnehmungen 11C und 11 D sind in montiertem Zustand der Querblattfeder 1 in Fahrzeuglängsrichtung x jeweils von zwischen einer Oberseite 111 und einer Unterseite 112 und Seitenflächen 113, 114 der Querblattfeder 1 gebildeten Randbereichen 115 und 116 der Oberseite 111 und der Unterseite 112 begrenzt, in deren Bereich die Dicke der Querblattfeder 1 vorzugsweise im Wesentlichen der Dicke außerhalb der Ausnehmungen 11C und 11 D entspricht. Durch diese Kontur entsteht wiederum nur eine geringe Spannungsüberhöhung im Übergang zwischen der Lagerstelle der Querblattfeder 1 und der restlichen die Lagerstelle umgebenden Oberfläche 11 der Querblattfeder 1. Die Breite der Querblattfeder 1 bleibt im Wesentlichen gleich, wodurch im Bereich der Ausnehmungen 11C und 11 D im Querblattfederquerschnitt jeweils ein erhöhter Faseranteil vorliegt.

Durch diese jeweils eine Einbuchtung darstellenden Ausnehmungen 11C und 11 D können erhöhte Quer- und Längskräfte von der Lagervorrichtung 4 gut in die Querblattfeder 1 eingeleitet werden. Über die Ausnehmungen 11C und 11 D werden die Einlegeeinrichtungen 9, 10 während der Montage der Lagervorrichtung 4 sowohl in Fahrzeuglängsrichtung und Fahrzeugquerrichtung auf der Querblattfeder 1 zentriert.

In Abhängigkeit des jeweils vorliegenden Anwendungsfalles sind für die Gestaltung der Ausnehmungen der Querblattfeder auch andere geeignete rotationssymmetrische Formen, wie beispielsweise ein Kegelstumpf, eine Halbkugel oder dergleichen, mit jeweils abgerundeten Übergängen zur restlichen Oberfläche 11 der Querblattfeder 1 vorsehbar.

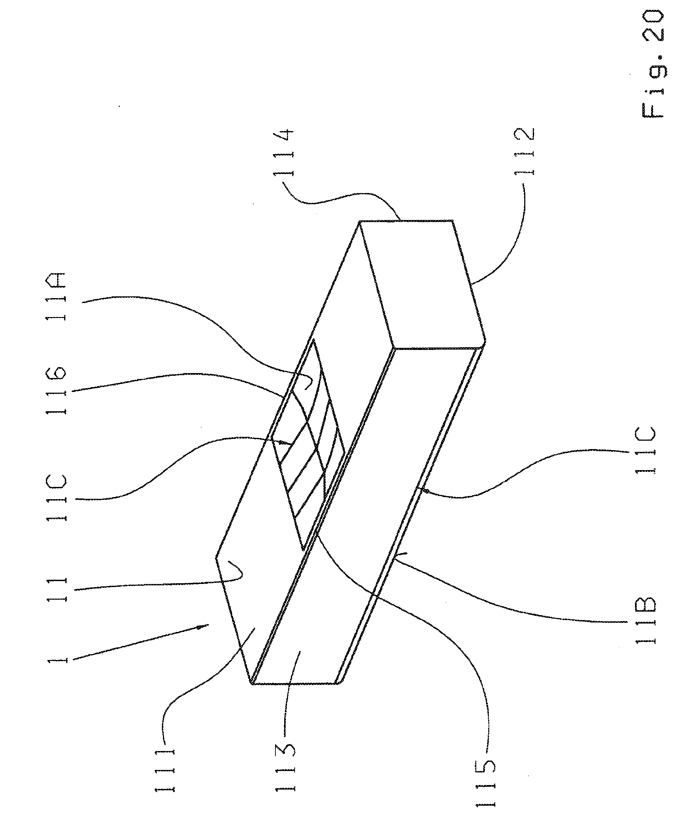

Bei der Ausführungsform der Querblattfeder 1 gemäß Fig. 20 sind die Ausnehmungen 11C und 11 D der Querblattfeder 1 mit einer abgerundeten Rechteckform, die eine kissenähnliche Form aufweist, in die Querblattfeder eingeprägt. Die Kontur kann beispielsweise durch zwei rechtwinklig überlagerte Kosinuskonturen hergestellt werden, die lediglich eine geringe Spannungsüberhöhung im Bereich zwischen der Lagerstelle der Lagervorrichtung 4 einer Querblattfeder 1 und der restlichen Oberfläche 11 der Querblattfeder 1 gewährleistet. Grundsätzlich besteht die Möglichkeit, die Querblattfeder auch im Bereich der Ausnehmungen 11C und 11 D mit der gleichen Breite wie im übrigen Verlauf der Querblattfeder 1 auszuführen, wodurch im Bereich der Ausnehmungen 11C und 11 D im Querblattfederquerschnitt ein erhöhter Fasernteil vorliegt. Die Ausnehmungen 11C und 11 D sind in montiertem Zustand der Querblattfeder 1 in Fahrzeuglängsrichtung x jeweils von zwischen einer Oberseite 111 und einer Unterseite 112 und Seitenflächen 113, 114 der Querblattfeder 1 gebildeten Randbereichen 115 und 116 der Oberseite 111 und der Unterseite 112 begrenzt, in deren Bereich die Dicke der Querblattfeder 1 vorzugsweise im Wesentlichen der Dicke außerhalb der Ausnehmungen 11C und 11 D entspricht.

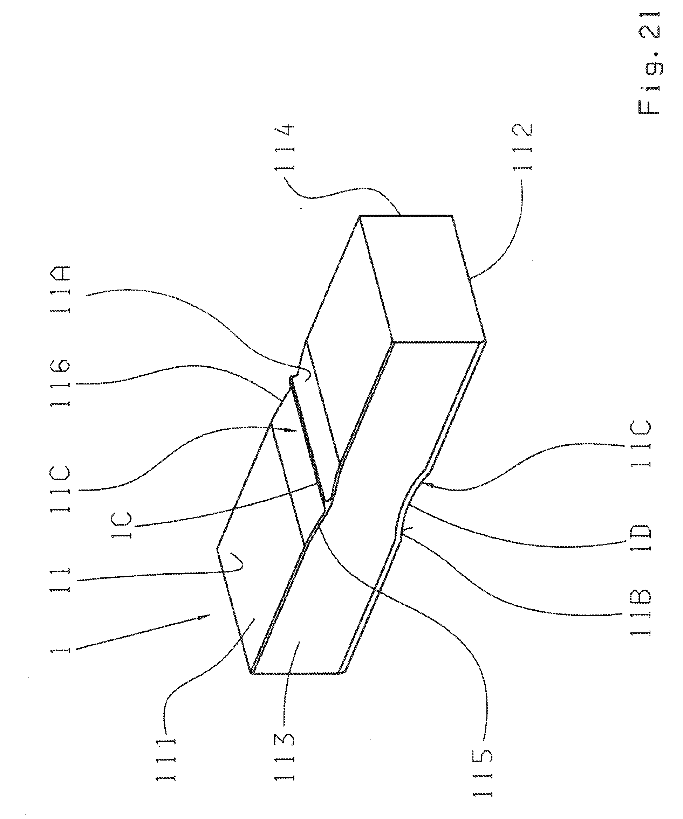

Die in Fig. 21 dargestellte Ausführungsform der Querblattfeder 1 weist jeweils im Bereich der Ausnehmungen 11C und 11 D einen sich über die gesamte Breite der Querblattfeder 1 erstreckenden Bereich 1C bzw. 1D auf, wobei die Querblattfeder 1 in Fahrzeughochrichtung bzw. in z-Richtung während der Herstellung verstärkt komprimiert wird. Dies führt wiederum zu einem erhöhten Faseranteil im Anlagebereich der Lagervorrichtung 4. Den Bereichen 1C und 1 D liegt wiederum im Wesentlichen die Funktionalität der Zentrierung der Lagervorrichtung 4 in Längsrichtung auf der Querblattfeder 1 zugrunde. Werden die Bereiche 1C und 1 D ausgehend von einem mittleren Bereich der Querblattfeder 1 mit in Fahrzeuglängsrichtung jeweils in Richtung der Außenseiten der Querblattfeder 1 leicht ansteigend ausgeführt, ist auch eine Zentrierung der Lagervorrichtung 4 in Querrichtung auf der Querblattfeder 1 möglich.

Grundsätzlich besteht auch die Möglichkeit, die Ausnehmungen 11C und 11 D der in Fig. 13 bis Fig. 18 sowie Fig. 21 gezeigten Ausführungen in montiertem Zustand der Querblattfeder 1 in Fahrzeuglängsrichtung x jeweils von zwischen einer Oberseite 111 und einer Unterseite 112 und Seitenflächen 113, 114 der Querblattfeder 1 gebildeten Randbereichen 115 und 116 der Oberseite 111 und der Unterseite 112 zu begrenzen, in deren Bereich die Dicke der Querblattfeder 1 vorzugsweise im Wesentlichen der Dicke außerhalb der Ausnehmungen 11C und 11 D entspricht.

Generell bietet der vorbeschriebene erfindungsgemäße Gegenstand bzw. bieten die verschiedenen Ausführungsformen des erfindungsgemäßen Gegenstandes die Möglichkeit, im Betrieb eines Fahrzeuges im Bereich einer Querblattfeder angreifende Kräfte und Momente ohne Durchbohrung der Querblattfeder in gewünschtem Umfang im Bereich eines Fahrzeugaufbaus abzustützen. Zudem ist diese Anforderung auch ohne die Einführung eines Fremdteiles in die Querblattfeder gewährleistet. Das bedeutet, dass Kräfte und Momente von Zentrallagern auf eine Querblattfeder wieder übertragbar sind, ohne dass die Dauerhaltbarkeit einer Querblattfeder durch Löcher zum Verschrauben oder Vernieten bzw. andere starke Umlenkungen der Fasern negativ beeinflusst wird.

Die erfindungsgemäßen Lagervorrichtungen sind mit der jeweils erforderlichen hohen Steifigkeit ausgeführt und die Oberfläche einer Querblattfeder wird durch die entsprechend ausgeführten Lagervorrichtungen im Betrieb nicht verletzt. Darüber hinaus treten im Bereich der Oberfläche einer Querblattfeder möglichst geringe Spannungen auf, womit die Querblattfeder durch die Lagervorrichtung auch bei wechselnder Belastung nicht beschädigt wird. Relativbewegungen im Bereich zwischen der Oberfläche der Querblattfeder und der Lagervorrichtungen bzw. der Zentrallager werden auf konstruktiv einfache und bauraumgünstige Art und Weise vermieden. Die erfindungsgemäße Lagergestaltung bietet zudem auf konstruktiv einfache Art und Weise die Möglichkeit, dass die Torsionsachse in Fahrzeuglängsrichtung bzw. in x-Richtung sich mit der neutralen Faser der Querblattfeder schneidet und parallel zu einer x-y-Ebene liegt. Eine exakte Positionierung der Lagervorrichtung auf der Querblattfeder sowohl in x- und y-Richtung ist ebenfalls gewährleistet, womit eine Funktionalität einer Querblattfeder mit hoher Präzision zur Verfügung stellbar ist.

Bedarfsweise bietet die erfindungsgemäße Lagervorrichtung auch die Möglichkeit, die Querblattfeder direkt am Fahrzeugaufbau bzw. ohne Isolation eines Hilfsrahmens gegenüber dem Fahrzeugaufbau am Hilfsrahmen zu befestigen.

Die erfindungsgemäße Lagervorrichtung ist auch ohne aufwändige konstruktive Maßnahmen in unterschiedliche Radaufhängungskonfigurationen, die mit einer Querblattfeder und ähnlichen Faserverbundbauteilen ausgebildet sind, integrierbar.

Die in Bezug auf die Fahrzeughochachse z obere und die untere Hälfte der Lagervorrichtung 4 können in Abhängigkeit des jeweils vorliegenden Anwendungsfalles sowohl symmetrisch wie auch mit einer geringen Unsymmetrie ausgeführt werden, wobei Lagerunsymmetrien der Lagervorrichtung 4 gezielt zur Abstimmung der Lagersteifigkeit in den unterschiedlichen Richtungen nutzbar sind.

### Bezugszeichen

- 1: Querblattfeder
- 1A, 1B: Endbereich
- 1C, 1D: Bereich
- 1C1 bis 1C4: Nase
- 2, 3: äußeres Lager
- 4, 5: Lagervorrichtung
- 6: Lageraußenschale
- 6A: Vorsprung
- 7: Lageraußenschale
- 7A: Vorsprung
- 8: Schraubeneinrichtung
- 8A bis 8D: Schraubenelement
- 9: Einlegeeinrichtung
- 9A: Lagenelement
- 9A1, 9A2: wulstartiger Endbereich
- 9A3, 9A4: Hohlraum
- 9B: Lagenelement
- 9B1, 9B2: Endbereich
- 9C: Lagenelement
- 9C1, 9C2: Endbereich
- 9D: Einlegeteil
- 9D1: Ausnehmung
- 9E: Anlagefläche
- 9F: Aufnahmeeinrichtung
- 10: Einlegeeinrichtung
- 10A: Lagenelement
- 10A1, 10A2: wulstartiger Endbereich
- 10A3, 10A4: Hohlraum
- 10B: Lagenelement
- 10B1, 10B2: Endbereich
- 10C: Lagenelement
- 10C1, 10C2: Endbereich
- 10D: Einlegeteil
- 10D1: Ausnehmung
- 10E: Anlagefläche
- 10F: Aufnahmeeinrichtung
- 11: Oberfläche der Querblattfeder
- 11A, 11B: Auflagefläche
- 11C, 11D: Ausnehmung der Querblattfeder
- 12: Anlagefläche der Lagerschale
- 13: Steg
- 14: neutrale Faser
- 16, 17: Erhöhung
- 18, 19: Anschlagbereich
- 20, 21: Bohrung
- 30: Lageraußenschaleneinrichtung
- 111: Oberseite der Querblattfeder
- 112: Unterseite der Querblattfeder
- 113, 114: Seitenfläche der Querblattfeder
- 115, 116: Randbereich der Querblattfeder
- 100A bis 100E: Rippe
- 200A bis 200D: Rille
- E3 bis E10: Schnittebene
- TE1, TE2: Trennebene
- x: Fahrzeuglängsrichtung
- y: Fahrzeugquerrichtung
- z: Fahrzeughochrichtung

## Patentansprüche

1. Lagervorrichtung (4, 5) einer Querblattfeder (1), die im Bereich einer Fahrzeugachse eines Fahrzeuges montierbar ist, mit einer Lageraußenschaleneinrichtung (30) und mit von der Lageraußenschaleneinrichtung (30) zumindest bereichsweise umgriffenen Einlegeeinrichtungen (9, 10), die jeweils Lagenelemente (9A bis 9C und 10A bis 10C) mit unterschiedlicher Steifigkeit aufweisen, wobei die Einlegeeinrichtungen (9, 10) in montiertem Zustand jeweils zwischen der Lageraußenschaleneinrichtung (30) und der Querblattfeder (1) angeordnet sind und mit höherer Steifigkeit ausgeführte Lagenelemente (9C und 10C) jeweils zwischen der Querblattfeder (1) und mit niedrigerer Steifigkeit ausgeführten Lagenelementen (9A und 10A) positioniert sind, und wobei die mit höherer Steifigkeit ausgebildeten Lagenelemente (9B, 9C und 10B, 10C) zwischen in axialer Richtung der Querblattfeder (1) orientieren Endbereichen (9B1, 9B2, 9C1, 9C2 und 10B1, 10B2, 10C1, 10C2) halbschalenförmig und konvex ausgebildet sind und die Endbereiche (9B1, 9B2, 9C1, 9C2 und 10B1, 10B2, 10C1, 10C2) der mit höherer Steifigkeit ausgebildeten Lagenelemente (9B, 9C und 10B, 10C) in Bezug auf die Oberfläche (11) der Querblattfeder (1) konkav gekrümmte Bereiche aufweisen, deren freie Enden von der Oberfläche (11) der Querblattfeder (1) weggerichtet sind, **dadurch gekennzeichnet, dass** die an die mit niedrigerer Steifigkeit ausgeführten Lagenelemente (9A und 10A) und an die Querblattfeder (1) angrenzenden Lagenelemente (9C und 10C) mit höherer Steifigkeit mit ihren freien Enden die mit niedrigerer Steifigkeit ausgeführten Lagenelementen (9A und 10A) bereichsweise formschlüssig umgreifen.

2. Lagervorrichtung nach Anspruch 1, **dadurch gekennzeichnet, dass** zwischen den mit niedrigerer Steifigkeit ausgebildeten Lagenelementen (9A und 10A) und der Lageraußenschaleneinrichtung (30) wiederum weitere Lagenelemente (9B und 10B) mit höherer Steifigkeit vorgesehen sind.

3. Lagervorrichtung nach Anspruch 2, **dadurch gekennzeichnet, dass** die an die mit niedrigerer Steifigkeit ausgeführten Lagenelemente (9A und 10A) und an die Lageraußenschaleneinrichtung (30) angrenzenden weiteren Lagenelemente (9B und 10B) mit höherer Steifigkeit mit ihren freien Enden die Lageraußenschaleneinrichtung (30) bereichsweise formschlüssig umgreifen.

4. Lagervorrichtung nach einem der Ansprüche 1 bis 3, **dadurch gekennzeichnet, dass** die Lageraußenschaleneinrichtung (30) zwei miteinander verbindbare Lageraußenschalen (6, 7) aufweist, welche die Einlegeeinrichtungen (9, 10) zumindest bereichsweise umgreifen.

5. Lagervorrichtung nach Anspruch 4, **dadurch gekennzeichnet, dass** die Einlegeeinrichtungen (9, 10) über eine die Lageraußenschalen (6, 7) miteinander und mit einem Fahrzeugaufbau eines Fahrzeuges verbindende Schraubeneinrichtung (8) zumindest kraftschlüssig mit den Lageraußenschalen (6, 7) und der Querblattfeder (1) verbindbar sind.

6. Lagervorrichtung nach einem der Ansprüche 1 bis 5, **dadurch gekennzeichnet, dass** die Querblattfeder (1) in Bezug auf eine Fahrzeughochachse (z) in ober- und unterseitig angeordneten Anlagebereichen für die Einlegeeinrichtungen (9, 10) mit konvexen Erhebungen (16, 17) ausgebildet ist.

7. Lagervorrichtung nach einem der Ansprüche 1 bis 6, **dadurch gekennzeichnet, dass** zwischen den Lagenelementen (9A und 10C) und der Querblattfeder (1) jeweils ein vorzugsweise wenigstens annähernd halbzylindrisch ausgeführtes Einlegeteil (9D und 10D) angeordnet ist, die mit höherer Steifigkeit ausgebildet sind als die mit geringerer Steifigkeit ausgeführten Lagenelemente (9A und 10A).

8. Lagervorrichtung nach Anspruch 7, **dadurch gekennzeichnet, dass** die Einlegeteile (9D und 10D) in montiertem Zustand zumindest in der Querblattfeder (1) zugewandten Anlagenbereichen jeweils mit einer gummielastischen Schutzschicht ausgebildet sind.

9. Lagervorrichtung nach einem der Ansprüche 1 bis 8, **dadurch gekennzeichnet, dass** die mit höherer Steifigkeit ausgebildeten Lagenelemente (9B, 9C und 10B, 10C) wenigstens in den Endbereichen (9B1, 9B2, 9C1, 9C2 und 10B1, 10B2, 10C1, 10C2) zumindest bereichsweise eine gummielastische Schutzschicht aufweisen.

10. Lagervorrichtung nach einem der Ansprüche 1 bis 9, **dadurch gekennzeichnet, dass** zumindest die mit niedrigerer Steifigkeit ausgebildeten Lagenelemente (9A und 9C) Aussparungen (9A3, 9A4, 10A3, 10A4) aufweisen.

11. Lagervorrichtung nach einem der Ansprüche 1 bis 10, **dadurch gekennzeichnet, dass** wenigstens eine der Einlegeeinrichtungen (9, 10) in einer Auflagefläche (11 A, 11 B) der Querblattfeder (1) zugewandten Anlagefläche (9E, 10E) jeweils mit wenigstens einer Aufnahmeeinrichtung (9F, 10F) ausgeführt ist, in die ein Bereich (1 C, 1 D) der Querblattfeder (1) in montiertem Zustand der Einlegeeinrichtungen (9, 10) eingreift.

12. Lagervorrichtung nach Anspruch 11, **dadurch gekennzeichnet, dass** die Querblattfeder (1) im Bereich der Auflagefläche (11 A, 11 B) für eine der Einlegeeinrichtungen (9, 10) mit einer Ausnehmung (11C, 11D) ausgebildet ist, in die die Einlegeeinrichtung (9, 10) eingreift.

13. Lagervorrichtung nach Anspruch 11 oder 12, **dadurch gekennzeichnet, dass** der in die Einlegeeinrichtung (9, 10) eingreifende Bereich (1 C, 1 D) der Querblattfeder (1) im Bereich der Ausnehmung (11C, 11D) der Querblattfeder (1) vorgesehen ist.

14. Lagervorrichtung nach Anspruch 12 oder 13, **dadurch gekennzeichnet, dass** die Querblattfeder (1) im Bereich der Auflagefläche (11 A, 11 B) für eine der Einlegeeinrichtungen (9, 10) mit einer Ausnehmung (11C, 11D) ausgebildet ist.

15. Lagervorrichtung nach einem der Ansprüche 4 bis 14, **dadurch gekennzeichnet, dass** die mit der niedrigeren Steifigkeit ausgebildeten Lagenelemente (9A und 10A) die Lageraußenschalen (6, 7) mit in montiertem Zustand in Fahrzeugquerrichtung weisenden vorzugsweise wulstartigen Endbereichen übergreifen, wobei die Lageraußenschalen (6, 7) jeweils vorzugsweise mit Vorsprüngen (6A, 7A) in die wulstartigen Endbereiche (9A1, 9A2 und 10A1, 10A2 der Lagenelemente (9A und 10A) eingreifen.

## Claims

1. Bearing apparatus (4, 5) of a transverse leaf spring (1) which can be mounted in the region of a vehicle axle of a vehicle, having a bearing outer shell device (30) and having insert devices (9, 10) which are engaged around at least in regions by the bearing outer shell device (30) and have in each case layer elements (9A to 9C and 10A to 10C) of different rigidity, the insert devices (9, 10) being arranged in the mounted state in each case between the bearing outer shell device (30) and the transverse leaf spring (1), and layer elements (9C and 10C) which are configured with a higher rigidity being positioned in each case between the transverse leaf spring (1) and layer elements (9A and 10A) which are configured with a lower rigidity, and the layer elements (9B, 9C and 10B, 10C) which are configured with a higher rigidity being of half shell-shaped and convex configuration between end regions (9B1, 9B2, 9C1, 9C2 and 10B1, 10B2, 10C1, 10C2) which are oriented in the axial direction of the transverse leaf spring (1), and the end regions (9B1, 9B2, 9C1, 9C2 and 10B1, 10B2, 10C1, 10C2) of the layer elements (9B, 9C and 10B, 10C) which are configured with a higher rigidity having regions which are curved concavely in relation to the surface (11) of the transverse leaf spring (1) and the free ends of which are directed away from the surface (11) of the transverse leaf spring (1), **characterized in that** the layer elements (9A and 10A) which are configured with a lower rigidity and the layer elements (9C and 10C) with a higher rigidity which adjoin the transverse leaf spring (1) engage with their free ends in a positively locking manner in regions around the layer elements (9A and 10A) which are configured with a lower rigidity.

2. Bearing apparatus according to Claim 1, **characterized in that** in turn further layer elements (9B and 10B) with a higher rigidity are provided between the layer elements (9A and 10A) which are configured with a lower rigidity and the bearing outer shell device (30).

3. Bearing apparatus according to Claim 2, **characterized in that** the layer elements (9A and 10A) which are configured with a lower rigidity and the further layer elements (9B and 10B) with a higher rigidity which adjoin the bearing outer shell device (30) engage with their free ends in a positively locking manner in regions around the bearing outer shell device (30).

4. Bearing apparatus according to one of Claims 1 to 3, **characterized in that** the bearing outer shell device (30) has two bearing outer shells (6, 7) which can be connected to one another and engage at least in regions around the insert devices (9, 10).

5. Bearing apparatus according to Claim 4, **characterized in that** the insert devices (9, 10) can be connected at least in a non-positive manner to the bearing outer shells (6, 7) and the transverse leaf spring (1) via a screw device (8) which connects the bearing outer shells (6, 7) to one another and to a vehicle body of a vehicle.

6. Bearing apparatus according to one of Claims 1 to 5, **characterized in that** the transverse leaf spring (1) is configured with convex elevations (16, 17) in relation to a vehicle vertical axis (z) in bearing regions which are arranged on the top and bottom side for the insert devices (9, 10).

7. Bearing apparatus according to one of Claims 1 to 6, **characterized in that** in each case one insert part (9D and 10D) which is preferably of at least approximately semicylindrical configuration is arranged between the layer elements (9A and 10C) and the transverse leaf spring (1), which insert parts (9D and 10D) are configured with a higher rigidity than the layer elements (9A and 10A) which are configured with a lower rigidity.

8. Bearing apparatus according to Claim 7, **characterized in that**, in the mounted state, the insert parts (9D and 10D) are configured in each case with an elastomeric protective layer at least in bearing regions which face the transverse leaf spring (1).

9. Bearing apparatus according to one of Claims 1 to 8, **characterized in that** the layer elements (9B, 9C and 10B, 10C) which are configured with a higher rigidity have, at least in regions, an elastomeric protective layer at least in the end regions (9B1, 9B2, 9C1, 9C2 and 10B1, 10B2, 10C1, 10C2).

10. Bearing apparatus according to one of Claims 1 to 9, **characterized in that** at least the layer elements (9A and 9C) which are configured with a lower rigidity have cut-outs (9A3, 9A4, 10A3, 10A4) .

11. Bearing apparatus according to one of Claims 1 to 10, **characterized in that** at least one of the insert devices (9, 10) is configured in a bearing face (9E, 10E) which faces a supporting face (11A, 11B) of the transverse leaf spring (1) in each case with at least one receiving device (9F, 10F), into which a region (1C, 1D) of the transverse leaf spring (1) engages in the mounted state of the insert devices (9, 10).

12. Bearing apparatus according to Claim 11, **characterized in that** the transverse leaf spring (1) is configured in the region of the supporting face (11A, 11B) for one of the insert devices (9, 10) with a recess (11C, 11D), into which the insert device (9, 10) engages.

13. Bearing apparatus according to Claim 11 or 12, **characterized in that** that region (1C, 1D) of the transverse leaf spring (1) which engages into the insert device (9, 10) is provided in the region of the recess (11C, 11D) of the transverse leaf spring (1).

14. Bearing apparatus according to Claim 12 or 13, **characterized in that** the transverse leaf spring (1) is configured with a recess (11C, 11D) in the region of the supporting face (11A, 11B) for one of the insert devices (9, 10).

15. Bearing apparatus according to one of Claims 4 to 14, **characterized in that** the layer elements (9A and 10A) which are configured with the lower rigidity engage over the bearing outer shells (6, 7) with preferably bead-like end regions which point in the vehicle transverse direction in the mounted state, the bearing outer shells (6, 7) in each case preferably engaging with projections (6A, 7A) into the bead-like end regions (9A1, 9A2 and 10A1, 10A2) of the layer elements (9A and 10A).

## Revendications

1. Dispositif de palier (4, 5) pour un ressort à lame transversal (1), qui peut être monté dans la région d'un essieu d'un véhicule, comprenant un système de coque extérieure de palier (30) et des systèmes d'insert (9, 10) autour desquels vient en prise au moins en partie le système de coque extérieure de palier (30), lesquels présentent des éléments de feuille (9A à 9C et 10A à 10C) de rigidités différentes, les systèmes d'insert (9, 10), dans l'état monté, étant disposés à chaque fois entre le système de coque extérieure de palier (30) et le ressort à lame transversal (1) et les éléments de feuille (9C et 10C) réalisés avec une plus grande rigidité étant positionnés à chaque fois entre le ressort à lame transversal (1) et les éléments de feuille réalisés avec une plus faible rigidité (9A et 10A), et les éléments de feuille réalisés avec une plus grande rigidité (9B, 9C et 10B, 10C) étant réalisés sous forme convexe et en forme de demi-coques entre des régions d'extrémité (9B1, 9B2, 9C1, 9C2 et 10B1, 10B2, 10C1, 10C2) orientées dans la direction axiale du ressort à lame transversal (1) et les régions d'extrémité (9B1, 9B2, 9C1, 9C2 et 10B1, 10B2, 10C1, 10C2) des éléments de feuille réalisés avec une plus grande rigidité (9B, 9C et 10B, 10C) présentant des régions de courbure concave par rapport à la surface (11) du ressort à lame transversal (1), dont les extrémités libres sont orientées à l'écart de la surface (11) du ressort à lame transversal (1), **caractérisé en ce que** les éléments de feuille (9C et 10C) de plus grande rigidité adjacents aux éléments de feuille (9A et 10A) réalisés avec une plus faible rigidité et au ressort à lame transversal (1) viennent en prise en partie par engagement positif avec leurs extrémités libres autour des éléments de feuille (9A et 10A) réalisés avec une plus faible rigidité.

2. Dispositif de palier selon la revendication 1, **caractérisé en ce qu'**entre les éléments de feuille (9A et 10A) réalisés avec une plus faible rigidité et le système de coque extérieure de palier (30) sont à nouveau prévus des éléments de feuille supplémentaires (9B et 10B) de plus grande rigidité.

3. Dispositif de palier selon la revendication 2, **caractérisé en ce que** les éléments de feuille supplémentaires (9B et 10B) de plus grande rigidité adjacents aux éléments de feuille (9A et 10A) réalisés avec une plus faible rigidité et au système de coque extérieure de palier (30) viennent en prise en partie par engagement positif avec leurs extrémités libres autour du système de coque extérieure de palier (30).

4. Dispositif de palier selon l'une quelconque des revendications 1 à 3, **caractérisé en ce que** le système de coque extérieure de palier (30) présente deux coques extérieures de palier pouvant être assemblées l'une à l'autre (6, 7) qui viennent en prise au moins en partie autour des systèmes d'insert (9, 10).

5. Dispositif de palier selon la revendication 4, **caractérisé en ce que** les systèmes d'insert (9, 10) peuvent être assemblés au moins par engagement par force aux coques extérieures de palier (6, 7) et au ressort à lame transversal (1) par le biais d'un système de vissage (8) assemblant les coques extérieures de palier (6, 7) l'une à l'autre et à une caisse d'un véhicule.

6. Dispositif de palier selon l'une quelconque des revendications 1 à 5, **caractérisé en ce que** le ressort à lame transversal (1) est réalisé avec des rehaussements convexes (16, 17), par rapport à un axe vertical (z) du véhicule, dans des régions d'appui pour les systèmes d'insert (9, 10), disposées du côté supérieur et du côté inférieur.

7. Dispositif de palier selon l'une quelconque des revendications 1 à 6, **caractérisé en ce qu'**entre les éléments de feuille (9A et 10C) et le ressort à lame transversal (1) est à chaque fois disposée une pièce d'insert (9D et 10D) réalisée de préférence au moins approximativement sous forme semi-cylindrique, laquelle est réalisée avec une plus grande rigidité que les éléments de feuille (9A et 10A) réalisés avec une plus faible rigidité.

8. Dispositif de palier selon la revendication 7, **caractérisé en ce que** les pièces d'insert (9D et 10D), dans l'état monté, sont réalisées à chaque fois avec une couche de protection ayant l'élasticité du caoutchouc au moins dans des régions d'appui tournées vers le ressort à lame transversal (1).

9. Dispositif de palier selon l'une quelconque des revendications 1 à 8, **caractérisé en ce que** les éléments de feuille réalisés avec une plus grande rigidité (9B, 9C et 10B, 10C) présentent au moins dans les régions d'extrémité (9B1, 9B2, 9C1, 9C2 et 10B1, 10B2, 10C1, 10C2) au moins en partie une couche de protection ayant l'élasticité du caoutchouc.

10. Dispositif de palier selon l'une quelconque des revendications 1 à 9, **caractérisé en ce qu'**au moins les éléments de feuille réalisés avec une plus faible rigidité (9A et 9C) présentent des évidements (9A3, 9A4, 10A3, 10A4).

11. Dispositif de palier selon l'une quelconque des revendications 1 à 10, **caractérisé en ce qu'**au moins une face d'appui (9E, 10E) tournée vers les systèmes d'insert (9, 10) dans une surface de support (11A, 11B) du ressort à lame transversal (1) est réalisée à chaque fois avec au moins un système de réception (9F, 10F), dans lequel s'engage une région (1C, 1D) du ressort à lame transversal (1) dans l'état monté des systèmes d'insert (9, 10).

12. Dispositif de palier selon la revendication 11, **caractérisé en ce que** le ressort à lame transversal (1) est réalisé dans la région de la surface de support (11A, 11B) pour l'un des systèmes d'insert (9, 10) avec un évidement (11C, 11D) dans lequel s'engage le système d'insert (9, 10).

13. Dispositif de palier selon la revendication 11 ou 12, **caractérisé en ce que** la région (1C, 1D) du ressort à lame transversal (1) s'engageant dans le système d'insert (9, 10) est prévue dans la région de l'évidement (11C, 11D) du ressort à lame transversal (1).

14. Dispositif de palier selon la revendication 12 ou 13, **caractérisé en ce que** le ressort à lame transversal (1) est réalisé dans la région de la surface de support (11A, 11B) pour l'un des systèmes d'insert (9, 10) avec un évidement (11C, 11D).

15. Dispositif de palier selon l'une quelconque des revendications 4 à 14, **caractérisé en ce que** les éléments de feuille (9A et 10A) réalisés avec la plus faible rigidité viennent en prise par le dessus avec les coques extérieures de palier (6, 7) par des régions d'extrémité de préférence de type bourrelet tournées dans la direction transversale du véhicule dans l'état monté, les coques extérieures de palier (6, 7) venant en prise à chaque fois de préférence avec des saillies (6A, 7A) dans les régions d'extrémité de type bourrelet (9A1, 9A2 et 10A1, 10A2) des éléments de feuille (9A et 10A).
